# EUROPEAN PATENT SPECIFICATION

(11) **EP 3 424 356 B1**
(45) Date of publication and mention of the grant of the patent: **15.05.2024**
(21) Application number: 17898744.2
(22) Date of filing: 28.02.2017
(51) Int. Cl.: A41D 19/04, A41D 19/02, A41D 19/00, B29C 65/02, B29D 99/00, B65B 47/00, B65B 65/00, B65B 5/00

(54) **GLOVE MANUFACTURING AND FITTING DEVICE**
HANDSCHUHHERSTELLUNG UND PASSVORRICHTUNG
DISPOSITIF DE FABRICATION ET D'AJUSTEMENT DE GANT

(43) Date of publication of application: 09.01.2019
(73) Proprietor: Kanamori, Keishiroh, Tokyo 150-0032 (JP)
(72) Inventor: Kanamori, Keishiroh, Tokyo 150-0032 (JP)
(74) Representative: Kreuels, Justus
(86) International application number: PCT/JP2017/008025
(87) International publication number: WO 2018/158868

(56) References cited:
- WO-A1-91/16828
- GB-A- 2 343 359
- GB-A- 2 358 785
- GB-A- 2 458 133
- JP-A- S60 259 602
- JP-A- 2002 088 540
- JP-A- 2002 088 540
- US-A- 3 124 807

## Description

### [Technical Field]

The present invention relates to an apparatus for producing and putting on gloves.

### [Background Art]

Conventionally, disposable gloves produced by cutting two plastic films into a glove shape, and thermally welding the contour thereof have been proposed (e.g., Patent Literature 1).

### [Citation List]

### [Patent Literature]

[Patent Literature 1] Japanese Patent No. 3763123
[Patent Literature 2] British Patent application No. GB 2 458 133 A

### [Summary of Invention]

### [Technical Problem]

Since there are various shapes of human hands, the basic shape of the glove itself will not fit an individual hand shape even if the glove shape and the ease of attachment and detachment thereof are improved. British patent application No. GB 2 458 133 A, which discloses the preamble of claim 1, discloses an apparatus and method for making gloves.

An object of the present invention is to provide an apparatus for producing and putting on gloves capable of producing gloves that fit an individual hand shape and also putting the glove on the hands, and a method for producing and putting on gloves.

### [Solution to Problem]

The invention is an apparatus for producing and putting on gloves according to claim 1.

According to the invention, the first elastic film and the second elastic film are welded and cut at a position on the outer side of the contour of the user's hand in a state where the hand is sandwiched between the first elastic film and the second elastic film. Since the first elastic film and the second elastic film have elasticity, the films adhere to the hand through their elastic resilience. Accordingly, it is possible to produce the gloves that fit the individual hand shape, and put the gloves on the hands.

A second embodiment is an apparatus for producing and putting on gloves is configured such that a first depression that can house a portion on a hand back side is formed in the first member; a second depression that can house a portion on a palm side is formed in the second member; a face on the hand back side makes contact with the first elastic film, and a face on the palm side makes contact with the second elastic film, and the hand is housed in a space formed by the first depression and the second depression in a state where the hand is sandwiched between the first member and the second member.

A third embodiment is an apparatus for producing and putting on gloves wherein first slip preventing means, of the first member, for preventing slippage of the first elastic film from slipping is arranged on a portion on an outer side of a portion on which the first depression is formed; and second slip preventing means, of the second member, for preventing slippage of the second elastic film is arranged on a portion on an outer side of a portion on which the second depression is formed.

A fourth embodiment is an apparatus for producing and putting on gloves wherein an operation switch for adjusting relative positions of the first member and the second member is arranged on the second depression.

A fifth embodiment is an apparatus for producing and putting on gloves wherein the elastic resilience of the first elastic film is set to be greater than the elastic resilience of the second elastic film.

A sixth embodiment is an apparatus for producing and putting on gloves wherein the first elastic film has heat shrinkability, and has air blowing means for blowing heated air against the first elastic film.

A seventh embodiment is an apparatus for producing and putting on gloves configured such that when the hand is housed in the space formed between the first depression and the second depression, heat generated by the welding means is increased to a welding temperature for welding the first elastic film and the second elastic film, and heat generated by the cutting means is increased to a cutting temperature for cutting the first elastic film and the second elastic film.

An eighth embodiment is a method for producing and putting on gloves according to claim 8.

### [Advantageous Effect of Invention]

The present invention can produce gloves that fit an individual hand shape and that can put the gloves on the hands.

### [Brief Description of Drawings]

[Figure 1] Figure 1 is a schematic perspective view of an apparatus for producing and putting on gloves according to a first embodiment of the present invention.
[Figure 2] Figure 2 is a schematic side view of the apparatus for producing and putting on gloves.
[Figure 3] Figure 3 is a schematic view of a film holder.
[Figure 4] Figure 4 is a schematic view of a lifting mechanism.
[Figure 5] Figure 5 is a schematic view of a portion of a bottom member.
[Figure 6] Figure 6 is a schematic view of a portion of the bottom member.
[Figure 7] Figure 7 is a schematic enlarged view of a portion of the bottom member.
[Figure 8] Figure 8 is a schematic view of a portion of a top member.
[Figure 9] Figure 9 is a schematic block diagram of a functional configuration of the apparatus for producing and putting on gloves.
[Figure 10] Figure 10 is a schematic perspective view of the apparatus for producing and putting on gloves.
[Figure 11] Figure 11 is a schematic perspective view of the apparatus for producing and putting on gloves.
[Figure 12] Figure 12 is a schematic perspective view of the apparatus for producing and putting on gloves.
[Figure 13] Figure 13 is a schematic perspective view of the apparatus for producing and putting on gloves.
[Figure 14] Figure 14 is a schematic perspective view of the apparatus for producing and putting on gloves.
[Figure 15] Figure 15 is a schematic view illustrating a state where gloves are adhered to and put on hands.
[Figure 16] Figure 16 is a schematic enlarged view of a portion of the bottom member.
[Figure 17] Figure 17 is a schematic enlarged view of a portion of the bottom member.
[Figure 18] Figure 18 is a schematic enlarged view of a portion of the bottom member and the top member.
[Figure 19] Figure 19 is a schematic conceptual diagram of a portion of the bottom member and the top member.
[Figure 20] Figure 20 is a schematic conceptual diagram of a portion of the bottom member and the top member.
[Figure 21] Figure 21 is a schematic conceptual diagram of a portion of the bottom member and the top member.
[Figure 22] Figure 22 is a schematic conceptual diagram of a portion of the bottom member and the top member.
[Figure 23] Figure 23 is a schematic conceptual diagram of a portion of the bottom member and the top member.
[Figure 24] Figure 24 is a schematic conceptual diagram illustrating a change in glove shape.
[Figure 25] Figure 25 is a flowchart showing a method for producing and putting on gloves.
[Figure 26] Figure 26 is a flowchart showing a method for producing and putting on gloves.
[Figure 27] Figure 27 is a schematic conceptual diagram showing a change in glove shape according to a second embodiment.
[Figure 28] Figure 28 is a schematic perspective view of an apparatus for producing and putting on gloves according to a third embodiment.
[Figure 29] Figure 29 is a schematic view of a portion of a top member.
[Figure 30] Figure 30 is a schematic conceptual diagram of a portion of the top member.
[Figure 31] Figure 31 is a schematic block diagram illustrating a functional configuration of the apparatus for producing and putting on gloves.
[Figure 32] Figure 32 is a flowchart showing a method for producing and putting on gloves.
[Figure 33] Figure 33 is a schematic conceptual diagram illustrating a change in glove shape according to the third embodiment.
[Figure 34] Figure 34 is a schematic perspective view of an apparatus for producing and putting on gloves according to a fourth embodiment.
[Figure 35] Figure 35 is a schematic perspective view of the apparatus for producing and putting on gloves.
[Figure 36] Figure 36 is a schematic enlarged view of a portion of a bottom member of an apparatus for producing and putting on gloves according to a fifth embodiment.
[Figure 37] Figure 37 is a schematic perspective view of an apparatus for producing and putting on gloves according to a sixth embodiment.
[Figure 38] Figure 38 is a schematic enlarged view of a portion of a bottom member.

### [Description of Embodiments]

Preferred embodiments of the present invention are described below referring to the drawings. Note that description of a configuration that can be implemented by a person skilled in the art as appropriate is omitted, and only the fundamental configuration of the present invention is described.

### [First Embodiment]

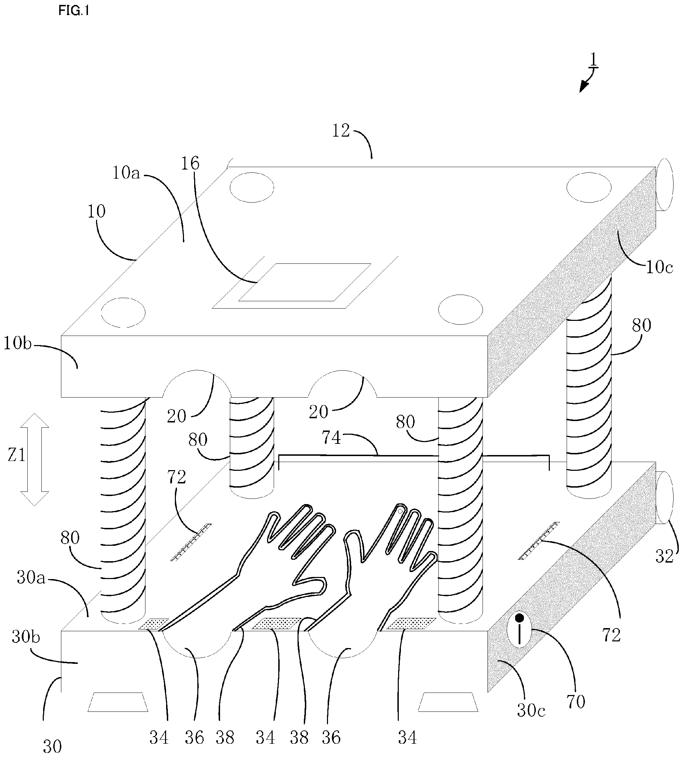

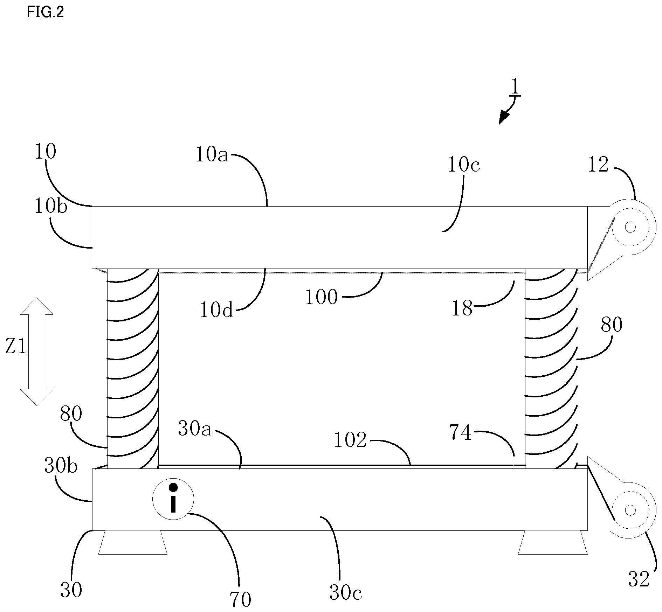

An overview of an apparatus for producing and putting on gloves 1 (hereinafter, referred to as an "apparatus 1") is described. As illustrated in Figures 1 and 2, the apparatus 1 includes a top member 10, a bottom member 30, and four rotating columns 80. The rotating columns 80 are each deployed in four corners of the top member 10 and the bottom member 30. The top member 10 and the bottom member 30 have a flat rectangular parallelepiped shape. An elastic film 100 is arranged on the top member 10, and an elastic film 102 is arranged on the bottom member 30.

The apparatus 1 is an example of the apparatus for producing and putting on gloves; the top member 10 is an example of the first member; the elastic film 100 is an example of the first elastic film: the bottom member 30 is an example of the second member; and the elastic film 102 is an example of the second elastic film.

The elastic film 100 and the elastic film 102 are plastic films having elasticity such as low density polyethylene films, cast polypropylene films, oriented polypropylene films, and ethylene-vinyl acetate copolymer films. The elastic film 100 and the elastic film 102 are formed by such plastic films as a single layer or multiple layers.

The direction of the top member 10 is referred to as an upward direction, and the direction of the bottom member 30 is referred to as a downward direction. In addition, the direction of a side face 10c of the top member 10 and a side face 30c of the bottom member 30 is referred to as a right direction, and the direction opposite thereto is referred to as a left direction. The direction of a front face 10b of the top member 10 and a front face 30b of the bottom member 30 is referred to as a forward direction, and the direction opposite thereto is referred to as a backward direction.

Note that the external forms of the top member 10 and the bottom member 30 are not limited to a flat rectangular parallelepiped, and may be a cube or a rounded shape, which is different from the present embodiment.

As illustrated in Figures 1 and 2, a film holder 12 is arranged on a side face of the top member 10 on the backward direction side, and a film holder 32 is arranged on a side face of the bottom member 30 on the backward direction side. The film holder 12 and the film holder 32 are configured to hold the elastic film 100 and the elastic film 102, respectively, such that it can be pulled out.

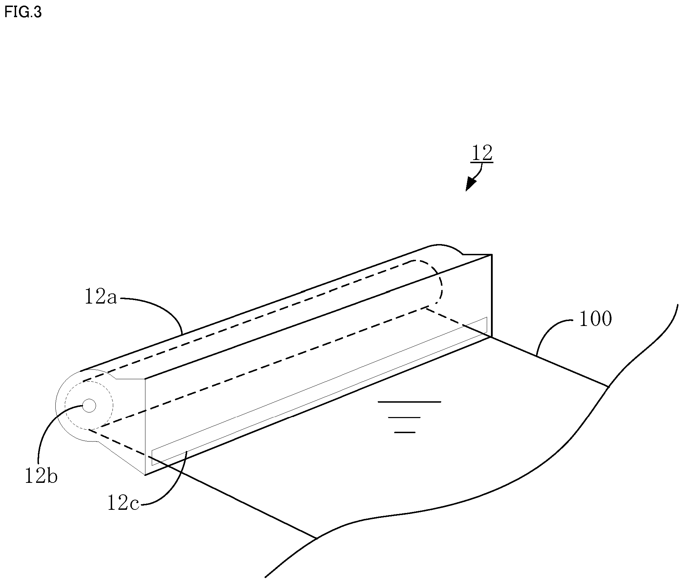

As illustrated in Figure 3, the film holder 12 includes a housing 12a and a rotary shaft 12b. A film outlet 12c, which is an opening, is formed in the housing 12a. The elastic film 100 is wound around the rotary shaft 12b and stored in the housing 12a so that it can be pulled out from the film outlet 12c. The configuration of the film holder 32 is similar to the configuration of the film holder 12.

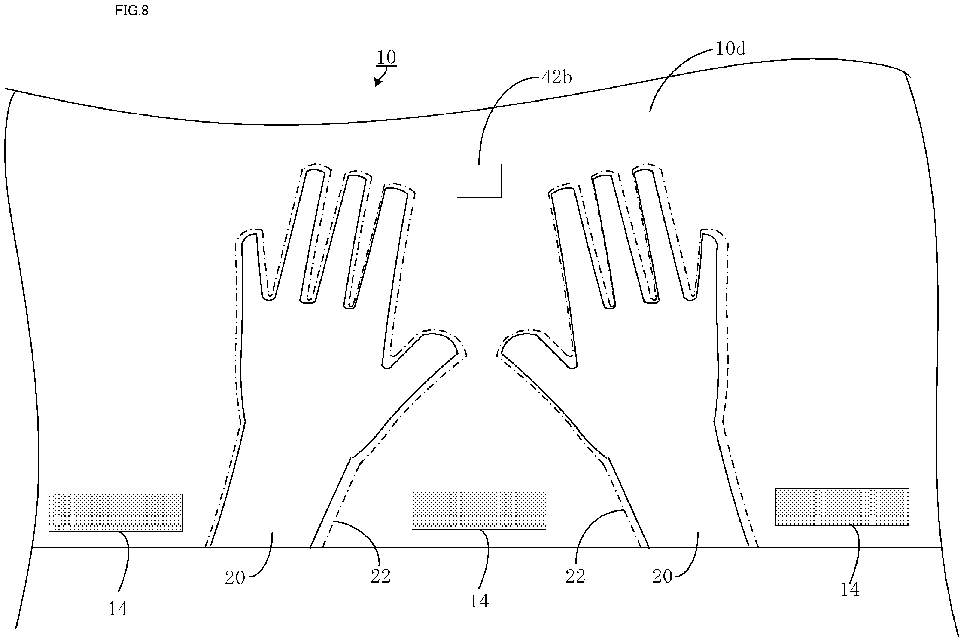

Figure 8 is a partial schematic view of the top member 10 as viewed from the direction of the bottom member 30. As illustrated in Figure 8, a film fixing part 14 is arranged on a portion of a bottom face 10d, which is an opposing face to a top face 10a of the top member 10 on the forward direction side. Similarly, as illustrated in Figure 1, a film fixing part 34 is arranged on a portion of a top face 30a of the bottom member 30 on the forward direction side. The film fixing part 14 and the film fixing part 34 are configured to fix the elastic film 100 and the elastic film 102, respectively. The film fixing part 14 and the film fixing part 34 are made of a material capable of fixing the elastic film 100 and the elastic film 102, such as silicone rubber.

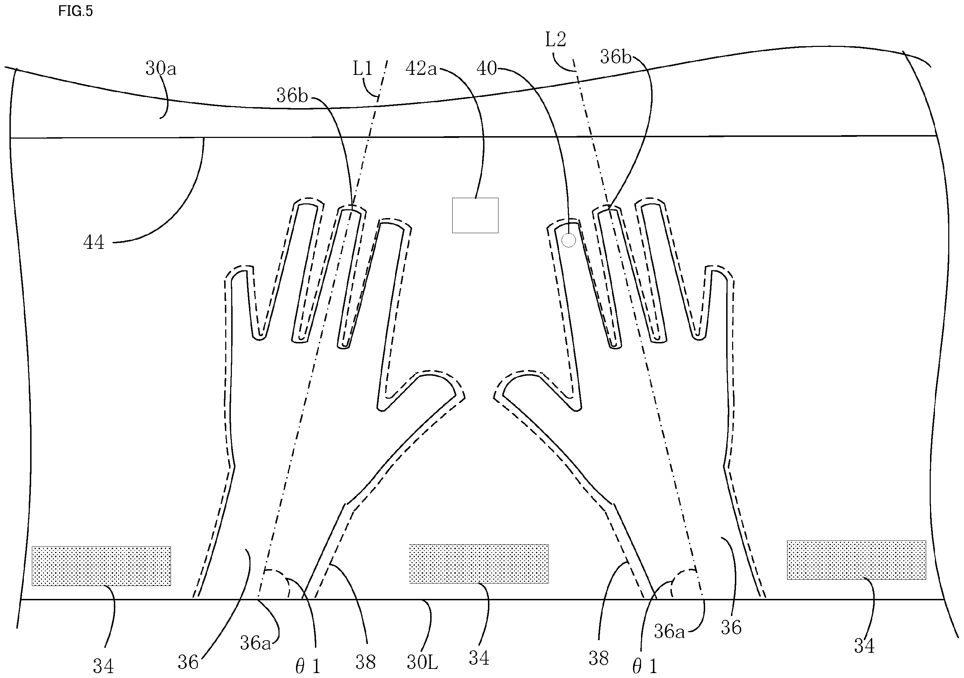

As illustrated in Figure 2, the elastic film 100 pulled out from the film holder 12 is pulled out in the forward direction through a guide 18, and an end thereof is fixed to the film fixing part 14 (see Figure 8). Similarly, the elastic film 102 pulled out from the film holder 32 is pulled out in the forward direction through a guide 74, and an end thereof is fixed to the film fixing part 34 (see Figure 5).

As illustrated in Figure 1, a display device 16 is arranged on the top face 10a of the top member 10 to display a predetermined text including a state of each part of the apparatus 1.

A foreign substance sensor 72 is arranged on the top face 30a of the bottom member 30. The foreign substance sensor 72 is, for example, an infrared sensor, configured to transmit an infrared ray toward a reception device (not illustrated) on the bottom face 10d of the top member 10, and display a text indicating an abnormality on the display device 16 when an abnormality occurs in the reception state of the infrared ray in the reception device of the top member 10.

A power switch 70 is arranged on the bottom member 30 to start and stop the entire apparatus 1.

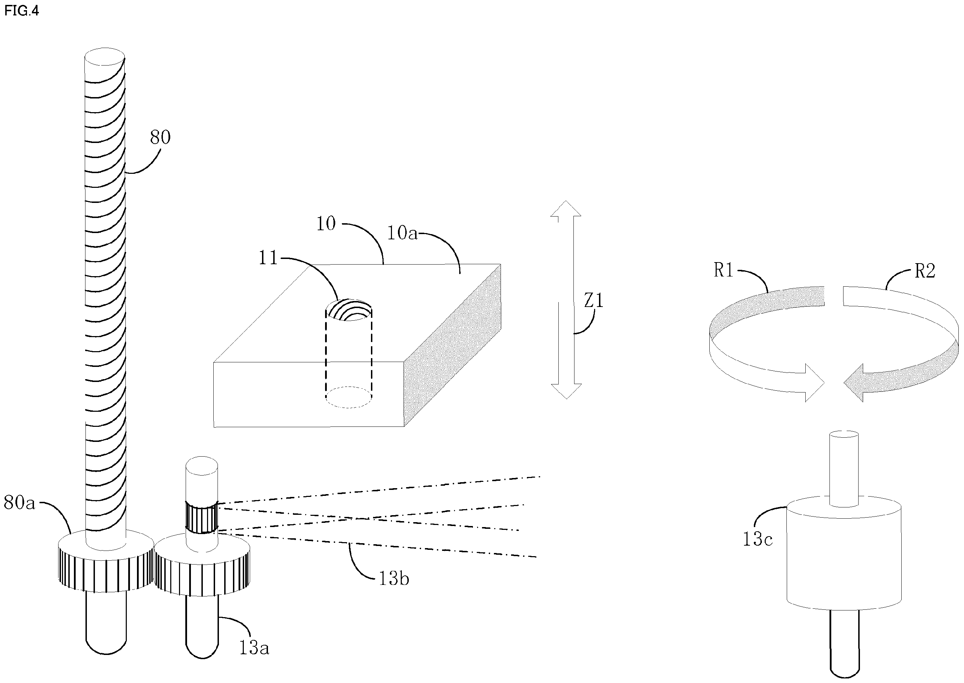

The top member 10 reciprocates (moves upward and downward) in the direction of arrow Z1 (vertical direction) in Figure 1. Figure 4 conceptually illustrates an example of a lifting mechanism of the top member 10. Figure 4 illustrates a portion of the top member 10 (a portion near one of the rotating columns 80) and a portion of the interior of the bottom member 30. As illustrated in Figure 4, a through-hole 11 is formed in the top member 10, and a female screw is formed in the through-hole 11. A through-hole (not illustrated) is formed in the bottom member 30 as well, but a female screw is not formed in the through-hole of the bottom member 30. A male screw is formed in the rotating column 80, and the top member 10 moves upward and downward with respect to the bottom member 30 as the rotating column 80 rotates. A gear 80a is formed below the rotating column 80. The gear 80a is arranged inside of the bottom member 30. The gear 80a is connected to a motor 13c placed inside of the bottom member 30 via a power transmission means such as a gear 13a or a belt 13b. The rotating column 80 rotates through the rotation of the rotary shaft of the motor 13c. The rotary shaft of the motor 13c rotates in a normal rotation direction R1 and a reverse rotation direction R2, and the rotating column 80 rotates in both the normal rotation direction and the reverse rotation direction. The top member 10 moves upward and downward as a result of the rotating column 80 rotating as such. The motor 13c, the power transmission means, and the rotating column 80 are an exemplary moving means (lifting means).

As illustrated in Figure 1, depressions 36 in a hand shape are formed in the top face 30a of the bottom member 30. The depressions 36 are formed for a right hand and for a left hand, respectively. The depressions 36 are depressed in a recessed shape in the top face 30a. The depressions 36 are an example of a second depression. Welding and cutting units 38 for welding and cutting the elastic film 100 and the elastic film 102 are formed around the depressions 36.

As illustrated in Figure 5, the depressions 36 in the bottom member 30 is formed into a shape capable of housing a user's palm and five fingers (hereinafter, referred to as a "hand shape"). A portion in which the user's palm is housed is referred to as a "palm corresponding portion"; a portion in which the thumb is housed is a "thumb corresponding portion"; a portion in which the index finger is housed is an "index finger corresponding portion"; a portion in which the middle finger is housed is a "middle finger corresponding portion"; a portion in which the ring finger is housed is a "ring finger corresponding portion" and a portion in which the little finger is housed is a "little finger corresponding portion". An operation switch 40 is deployed in the proximity of the tip of the index finger corresponding portion of the depression 36 in which the right hand is housed. The operation switch 40 controls power supply to the motor 13c (see Figure 4) to adjust the relative positions of the top member 10 and the bottom member 30. More specifically, the user of the apparatus 1 operates the operation switch to cause an upward and downward movement of the top member 10 in a state where the hands are placed in the depressions 36.

In the left and right depressions 36, straight lines L1 and L2 respectively connecting a base portion 36a and a tip part 36b of the middle finger corresponding portion are not perpendicular to, but inclined by an angle θ1 with respect to a straight line 30L that defines a portion of the top face 30a of the bottom member 30 in the forwardmost direction. The angle θ1 is, for example, an angle in a range from 60 degrees to 80 degrees. The straight lines L1 and L2 inclined by the angle θ1 with respect to the straight line 30L allows a user to place both hands in the depressions 36 in an ergonomically natural state.

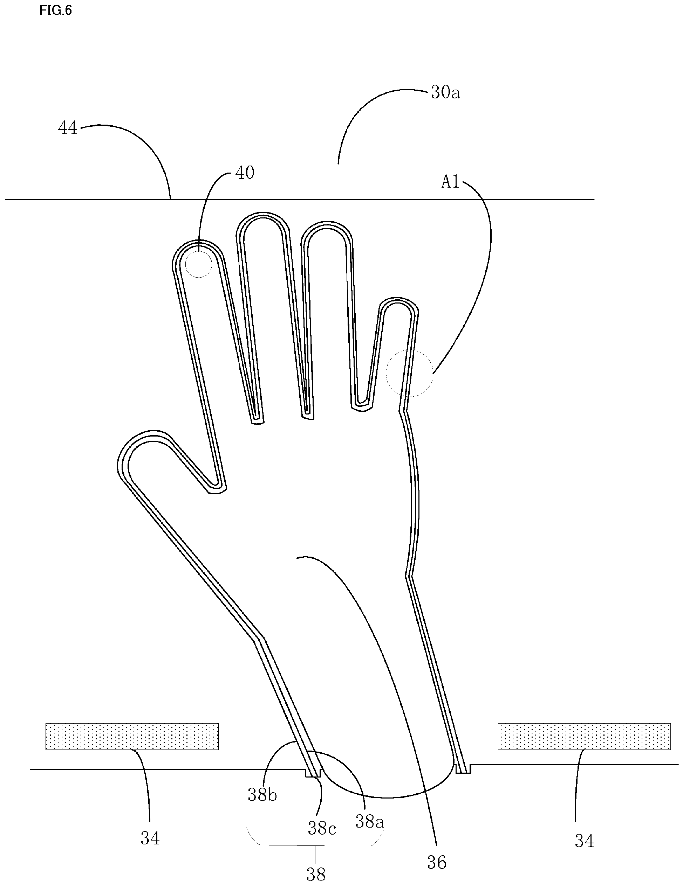

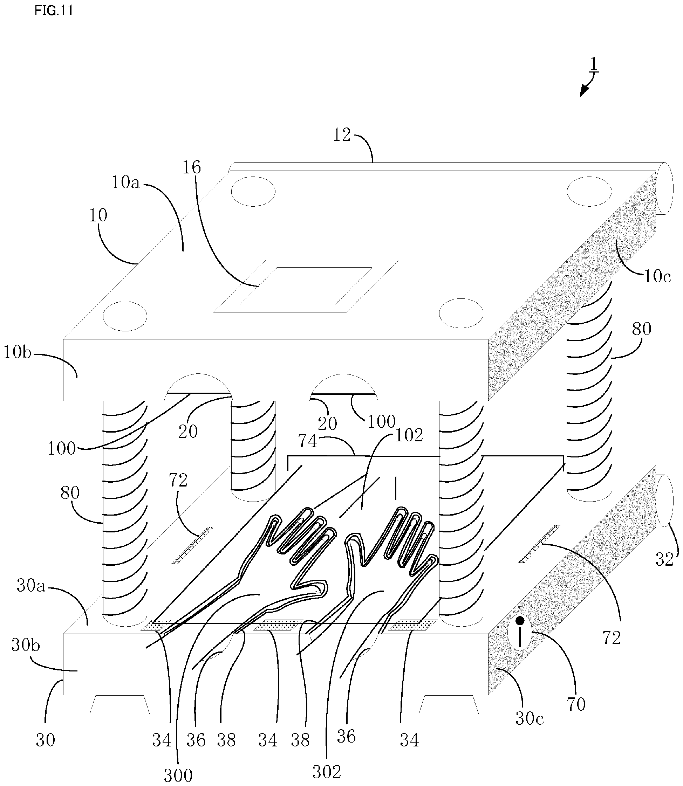

As illustrated in Figure 6, the welding and cutting unit 38 is formed in the outer side of the depression 36. The welding and cutting unit 38 includes a heating wire for welding 38a, a heating wire for cutting 38b, and a groove 38c. The heating wire for welding 38a is an exemplary welding means, and the heating wire for cutting 38b is an exemplary cutting means. The groove 38c is formed so as to surround the hand shape on the outer side of the depression 36 formed into the hand shape. The heating wire for welding 38a and the heating wire for cutting 38b are deployed on the bottom of the groove 38c. The heating wire for welding 38a is deployed on the depression 36 side, and the heating wire for cutting 38b is deployed on the outer side of the heating wire for welding 38a. While Figure 6 illustrates the depression 36 in which a right hand 302 (see Figure 11) is housed, the configuration of the depression 36 in which a left hand 300 (see Figure 11) is housed is similar to the configuration of the depression 36 in which the right hand 302 is housed, except that the operation switch 40 is not deployed.

When the user places his/her right hand 302 in the depression 36, the heating wire for welding 38a is positioned on the outer side (first outer side position) of the contour of the right hand 302, and the heating wire for cutting 38b is positioned further on the outer side (second outer side position) than that position. A position on the outer side of the depression 36 at which the heating wire for welding 38a is deployed in the groove 38c is an example of the first outer side position. A position on the outer side of the heating wire for welding 38a at which the heating wire for cutting 38b is deployed is an example of the second outer side position.

The heating wire for welding 38a and the heating wire for cutting 38b are nichrome wires, for example, and subjected to a safety measure to prevent problems such as getting burned. For example, the heating wire for welding 38a and the heating wire for cutting 38b are wrapped with an insulating material such as magnesium oxide, and enclosed in a metal pipe.

The operation switch 40 is deployed near the tip of the index finger corresponding portion in the depression 36 for the right hand, and can control the power supply to the motor 13c (see Figure 4) so as to operate an upward and downward movement of the top member 10.

As illustrated in Figure 6, a heating wire for cutting 44 for linearly cutting the elastic films 100 and 102 is deployed in a portion on the backward direction side of the outer side of the depression 36. It is possible to use the elastic films 100 and 102 that are sufficient for producing the gloves by cutting the elastic films 100 and 102 using the heating wire for cutting 44.

As illustrated in Figure 5, a contact sensor 42a is arranged on the bottom member 30, and as illustrated in Figure 8, a contact sensitive member 42b is arranged on the top member 10. The contact sensor 42a may be configured to sense contact of the contact sensitive member 42b, but for example, in the contact sensor 42a, an electric circuit is divided into two sections, which are connected through contact of a conductive member that is arranged on the contact sensitive member 42b so as to allow the electric current to flow.

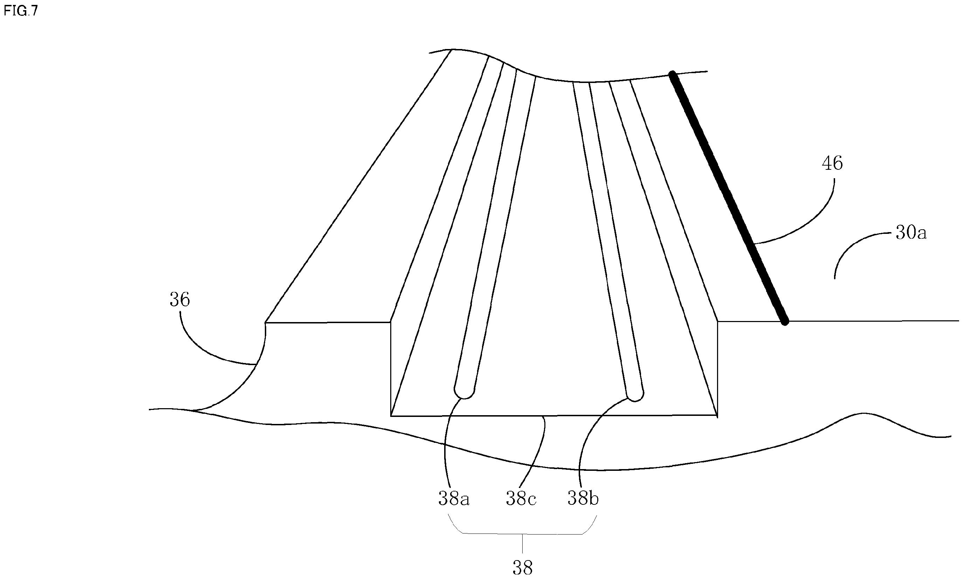

Next, the depression 36 and the welding and cutting unit 38 are described in detail with reference to Figure 7. The configuration of the depression 36 and the welding and cutting unit 38 is similar to any of the portions along the contour of the hand shape, but a region A1 near the little finger corresponding portion is described as an example.

As illustrated in Figure 7, a slip-preventing member 46 for preventing the elastic film 102 from slipping is arranged on the top face 30a on the outer side of the depression 36. The slip-preventing member 46 is formed from a material that can prevent the elastic film 102 from slipping, for example, formed from silicone rubber. The position of the slip-preventing member 46 is a position on the top face 30a on the outer side of the groove 38c and the depression 36. In other words, the groove 38c is interposed between the depression 36 and the slip-preventing member 46. The slip-preventing member 46 is disposed so as to surround the groove 38c. The slip-preventing member 46 is an example of the second slip-preventing means.

As illustrated in Figure 8, hand-shaped depressions 20 are formed on the bottom face 10d side of the top member 10. Projections 22 are formed on the outer side of the depressions 20 so as to surround the depressions 20. Each of the projections 22 is configured to enter the recessed groove 38c in the bottom member 30 when the top member 10 and the bottom member 30 come close to each other. The depression 20 is an example of the first depression. When the projection 22 enters near the bottom part of the groove 38c, the elastic film 100 and the elastic film 102 are interposed by the heating wire for welding 38a, the heating wire for cutting 38b, and the tip portion of the projection 22 so as to pressurize the films (hereinafter, referred to as a "pressurized state"). In the pressurized state, the elastic film 100 and the elastic film 102 are welded by the heating wire for welding 38a. Moreover, the elastic film 100 and the elastic film 102 are cut by the heating wire for cutting 38b in the pressurized state.

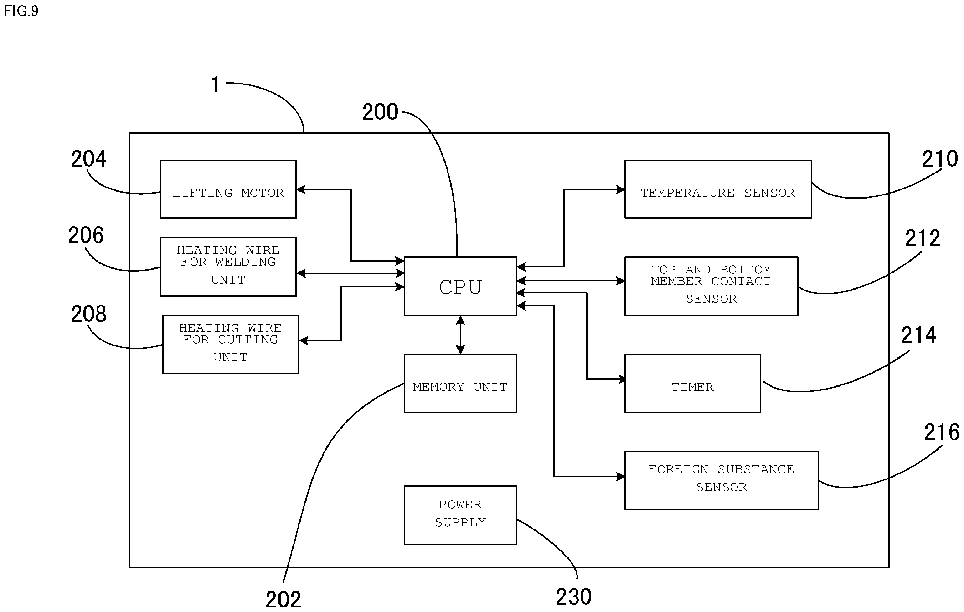

A functional block of the apparatus 1 is described with reference to Figure 9. The apparatus 1 includes a central processing unit (CPU) 200, a memory unit 202, a lifting motor 204, a heating wire for welding unit 206, a heating wire for cutting unit 208, a temperature sensor 210, a top and bottom member contact sensor 212, a timer 214, a foreign substance sensor 216, and a power supply 230.

Programs and data for controlling the operation of the entire apparatus 1 are stored in the memory unit 202. The lifting motor 204 controls the rotation of the motor 13c (see Figure 4) to control the rotation of the rotating column 80, that is, the upward and downward movement of the top member 10. The heating wire for welding unit 206 controls power supply to the heating wire for welding 38a. The heating wire for cutting unit 208 controls power supply to the heating wire for cutting 38b. The temperature sensor 210 receives a signal indicating a temperature from a temperature sensor (not illustrated) deployed in the vicinity of the heating wire for welding 38a and the heating wire for cutting 38b. The top and bottom member contact sensor 212 receives a signal indicating contact between the contact sensor 42a (see Figure 5) deployed on the bottom member 30 and the contact sensitive member 42b (see Figure 8) deployed on the top member 10. The timer 214 measures the time period detected by the top and bottom member contact sensor 212 during which the top member 10 and the bottom member 30 continue to be in contact with each other.

When a user arranges the elastic film 100 and the elastic film 102 on the top member 10 and the bottom member 30, respectively, and the power switch 70 is pressed, the apparatus 1 starts supplying power to the heating wire for welding 38a and the heating wire for cutting 38b by the heating wire for welding unit 206 and the heating wire for cutting unit 208, respectively. Once it is determined that the heat generated by the heating wire for welding 38a and the heating wire for cutting 38b reaches the temperature allowing welding and cutting of the elastic film 100 and the elastic film 102 based on the signal received by the temperature sensor 210, the apparatus 1 displays a text "Usable temperature is reached" indicating preparation completion on the display device 16. The top member 10 is lowered by the lifting motor 204 when the user viewing the text indicating preparation completion pushes both hands down in the depressions 36 from above the elastic film 102 so as to press the operation switch 40.

When the top and bottom member contact sensor 212 has determined that the top member 10 and the bottom member 30 are in contact with each other, the apparatus 1 controls the timer 214 to start counting time. When a predetermined time t1 elapses after the top member 10 and the bottom member 30 are in contact each other, the apparatus 1 controls the lifting motor 204 to move the top member 10 upward and downward. The predetermined time t1 is a sufficient time period, for example, 20 seconds (s), required for welding and cutting the elastic film 100 and the elastic film 102 by the heating wire for welding 38a and the heating wire for cutting 38b.

The foreign substance sensor 216 receives a signal from the foreign substance sensor 72 (see Figure 1).

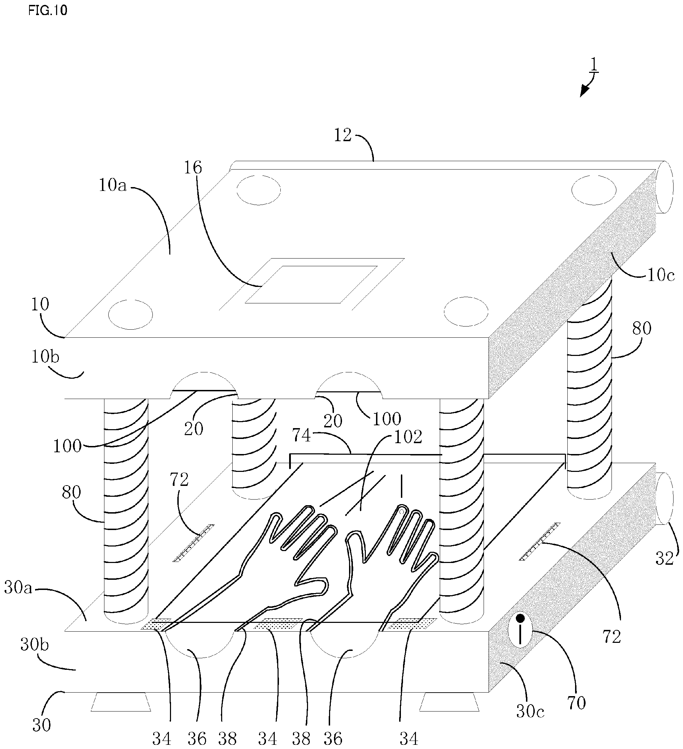

A method for producing and putting on gloves using the apparatus 1 is now described with reference to Figure 10 to Figure 15. First, as illustrated in Figure 10, the user of the apparatus 1 pulls the elastic film 100 out from the film holder 12 along the bottom face 10d (face on the opposing side to the bottom member 30) of the top member 10 in the forward direction, and fixes the film to the film fixing part 14 (see Figure 8). The user then pulls the elastic film 102 out from the film holder 32 along the top face 30a (face on the opposing side to the top member 10) of the bottom member 30 in the forward direction, and fixes the film to the film fixing part 34.

The user then presses the power switch 70 (see Figure 1) to activate the apparatus 1. Once it is determined that the heat generated by the heating wire for welding 38a and the heating wire for cutting 38b reaches the temperature allowing welding and cutting of the elastic films 100 and 102, the apparatus 1 displays a text "Usable temperature is reached" indicating preparation completion on the display device 16.

The user then places both hands on the elastic film 102 and pushes the hands into the depressions 36, as illustrated in Figure 11. Through this operation, the elastic film 102 is transformed into the shape of the user's palms.

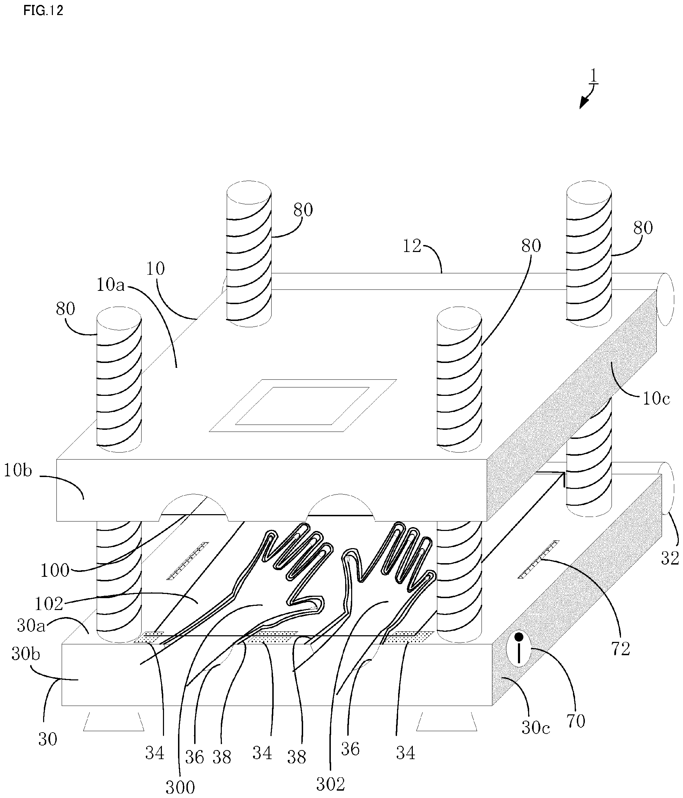

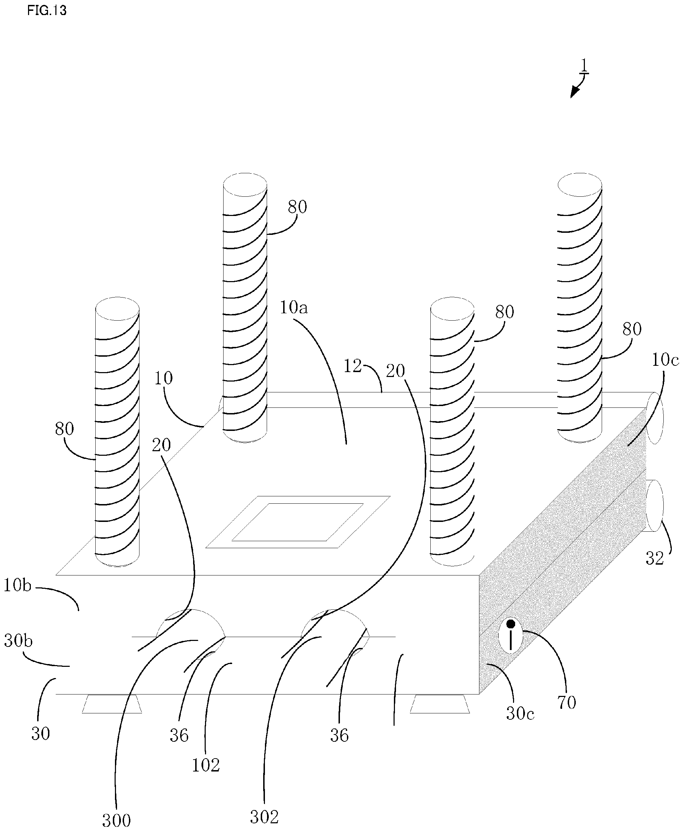

When the operation switch 40 (see Figure 6) is pressed in this state, the top member 10 moves downward toward the bottom member 30, as illustrated in Figure 12. The bottom face 10d of the top member 10 makes contact with the top face 30a of the bottom member 30, and the hands are housed in the spaces formed by the depressions 20 of the top member 10 and the depressions 36 of the bottom member 30, as illustrated in Figure 13. More specifically, in the state of the user's hands being sandwiched between the top member 10 and the bottom member 30, one face of each of the hands (back side face) is in contact with the elastic film 100, the other face of each of the hands (palm side face) is in contact with the second elastic film 102, thereby housing the user's hands in the space formed by the depressions 20 and the depressions 36.

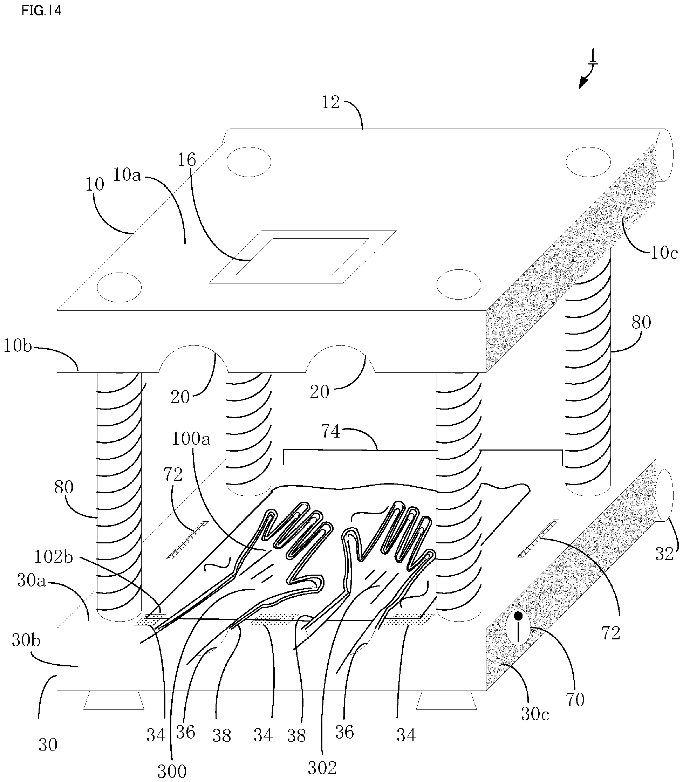

In the process of the top member 10 moving downward along with the elastic film 100, the elastic film 100 is transformed into the shape of the back side of the user's hands. Once the predetermined time t1 has elapsed in the state where the top member 10 and the bottom member 30 are in contact with each other, the top member 10 moves upward (see Figure 14). The elastic film 100 and the elastic film 102 are welded and cut at the point of time when the predetermined time t1 has elapsed. After the elastic film 100 and the elastic film 102 are cut into the glove shape, the films are separated into portions forming the gloves, and portions not forming the gloves. The portions forming the gloves are an elastic film 100a and an elastic film 102a, and the portions not forming the gloves are unnecessary portions 100b and 102b.

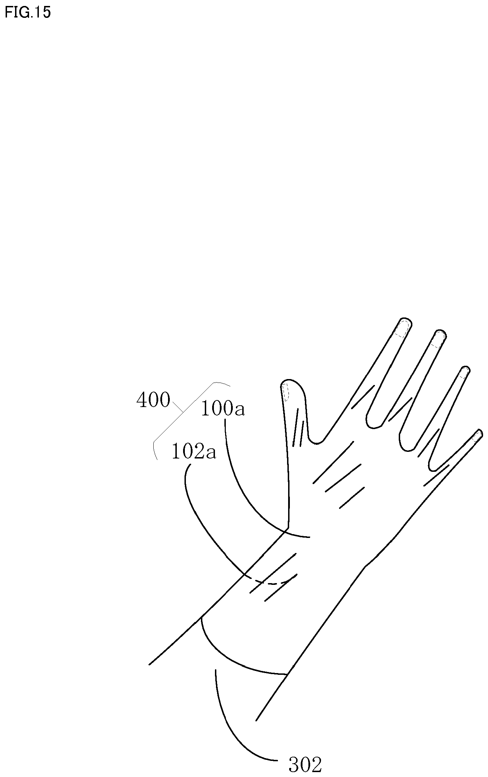

When the top member 10 moves upward, as illustrated in Figure 15, the elastic film 100a and the elastic film 102a are adhered to the user's hands due to the elastic resilience thereof, and the glove 400 is produced and put on the right hand 302. For the left hand 300, the glove is produced and put on in the same manner.

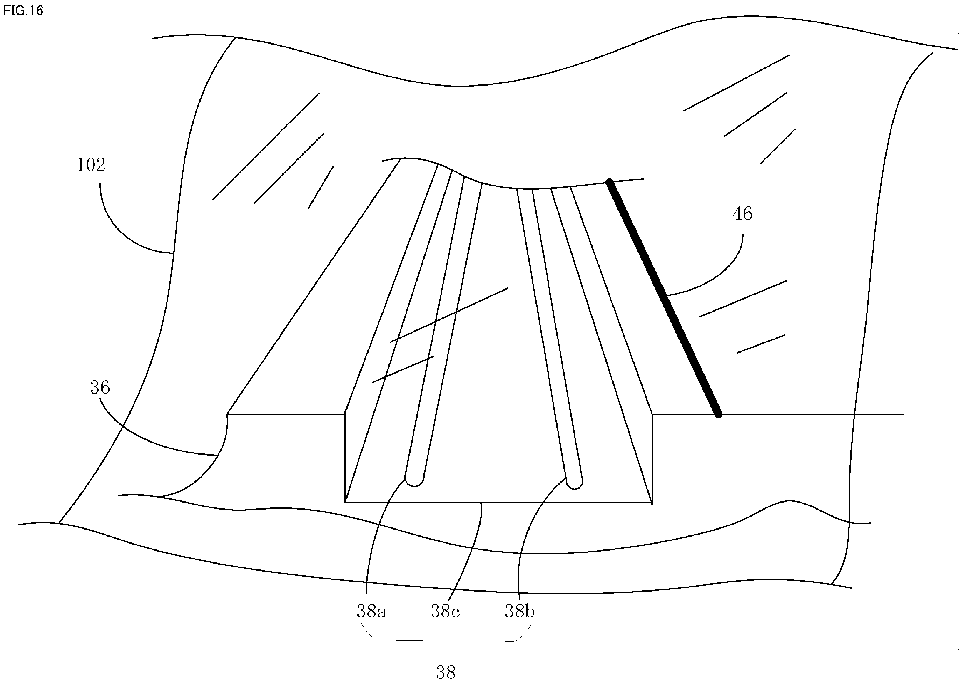

The process of the elastic film 100 and the elastic film 102 transforming into the hand shape is described below in detail with reference to Figure 16 to Figure 23. As illustrated in Figure 16, when the elastic film 102 is arranged on the bottom member 30, the elastic film 102 makes contact with the slip-preventing member 46.

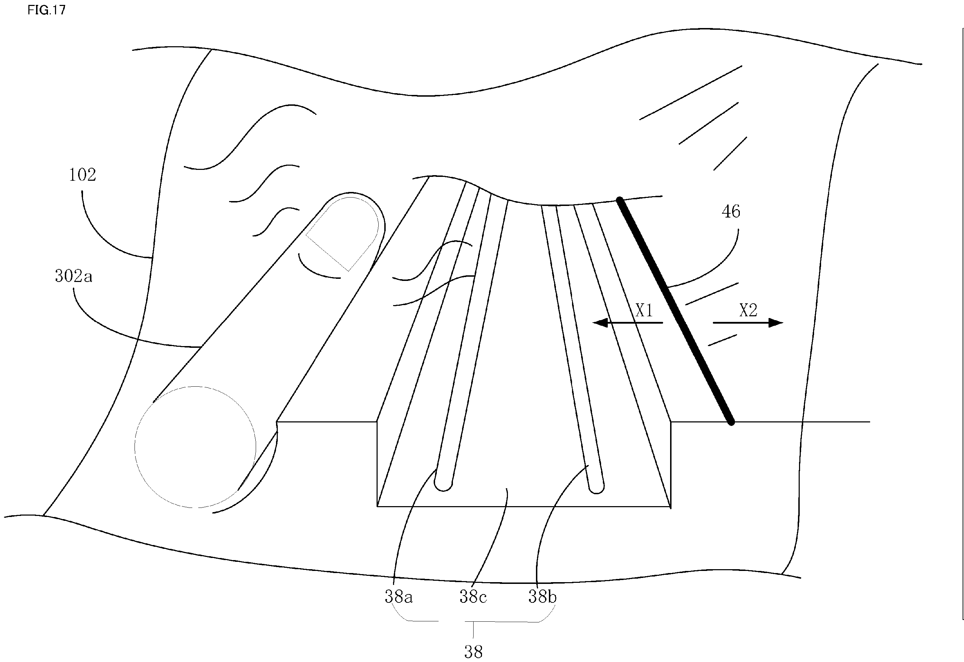

When the elastic film 102 is pushed into the depression 36 by the little finger 302a as illustrated in Figure 17, a portion positioned on the left side of the slip-preventing member 46, namely, in the direction of arrow X1 elastically transforms the elastic film 102 by the pressure of the little finger 302a. On the other hand, a portion positioned on the right side of the slip-preventing member 46, namely, in the direction of arrow X2 is not affected by the pressure of the little finger 302a being pushed, and is not transformed. That is, as a technical effect of the slip-preventing member 46, the portion on the right side of the slip-preventing member 46 is not transformed, and only the portion on the left side, that is, a portion on the little finger 302a side is elastically transformed according to the shape of the little finger 302a. Accordingly, it is possible to generate sufficient elastic resilience in the final process of producing and putting on the gloves.

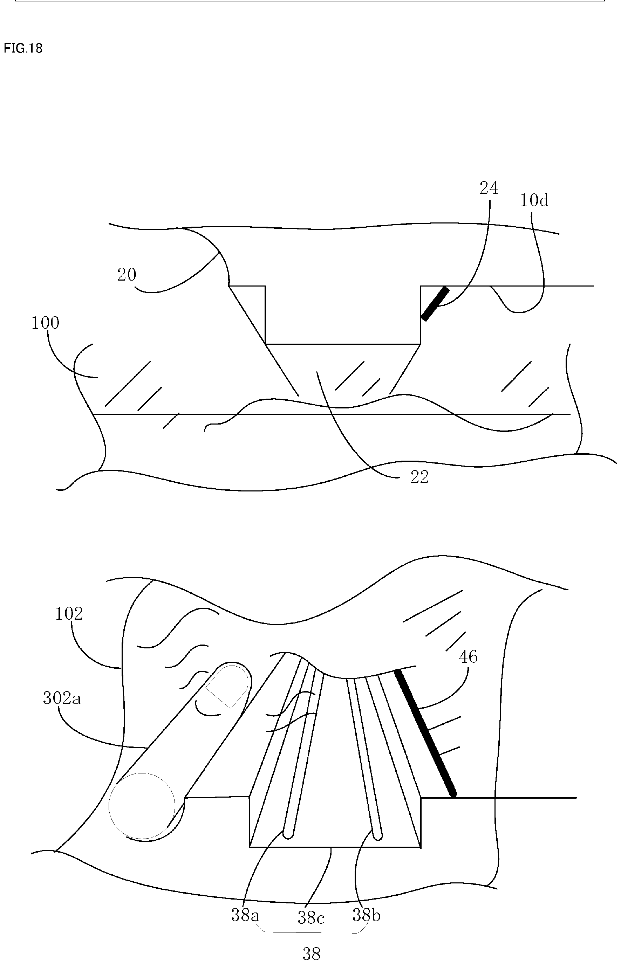

When the elastic film 102 is pushed into the depression 36 by the little finger 302a, the elastic film 102 is pushed into the depression 36 by the other fingers and the palm as well. When the user presses the operation switch 40 in such a state, the top member 10 moves downward along with the elastic film 100 as illustrated in Figure 18. The projection 22 is formed in the bottom face 10d of the top member 10 so as to surround the depression 20. The projection 22 is configured to engage with the groove 38c of the bottom member 30. The slip-preventing member 24 for preventing slippage of the elastic film 100 is arranged around the outer side of the projection 22 (opposing side to the depression 20) in the bottom face 10d. The position of the slip-preventing member 24 is a position on the bottom face 10d on the outer side of the projection 22 and the depression 20. In other words, the projection 22 is sandwiched between the depression 20 and the slip-preventing member 24. The slip-preventing member 24 is formed from a material capable of preventing slippage of the elastic film 100, for example, silicone rubber.

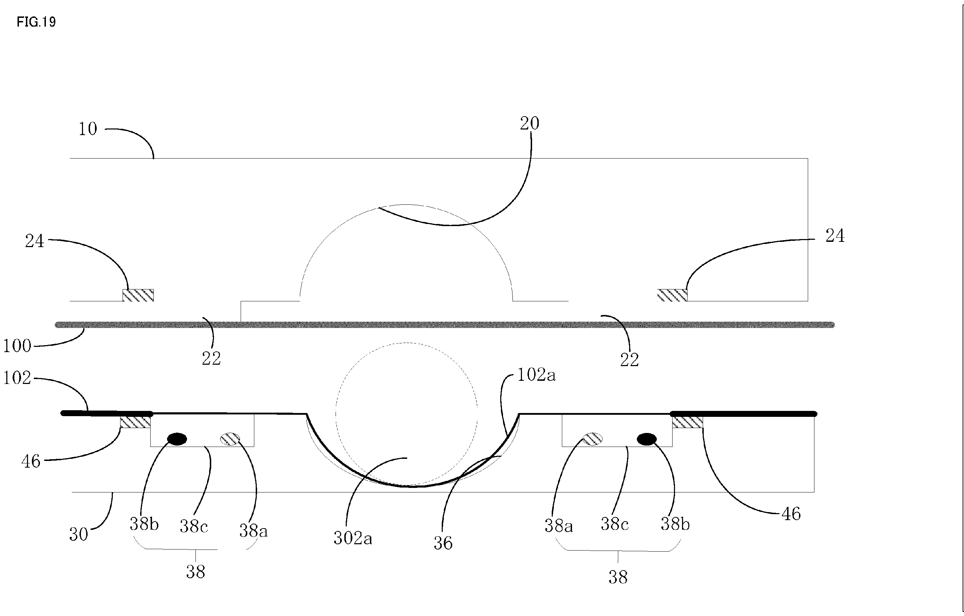

The state in which the top member 10 moves toward the bottom member 30 is described below with reference to the conceptual diagrams of Figures 19 to 23. Figure 19 and the like conceptually show a schematic cross-section cut in a direction perpendicular to the direction of pulling out the elastic films 100 and 102. The state in Figure 19 is similar to the state in Figure 18, where a portion positioned in the direction of the little finger 302a from the slip-preventing member 46 in the elastic film 102 arranged on the bottom member 30 is elastically transformed because of being pressed by the little finger 302a. In contrast, the elastic film 100 arranged on the top member 10 is not transformed.

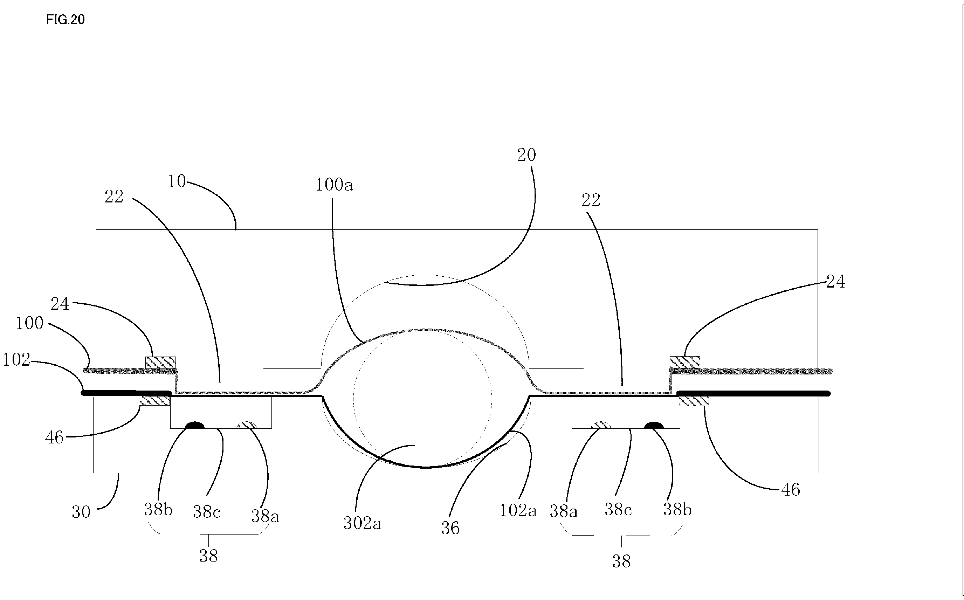

As illustrated in Figure 20, when the tips of the projections 22 of the top member 10 descend to a position lower than the position of the upper edge of the little finger 302a, the elastic film 100 is elastically transformed due to the presence of the little finger 302a. Only a portion of the elastic film 100 positioned in the direction of the little finger 302a is elastically transformed around the slip-preventing member 24 as a reference.

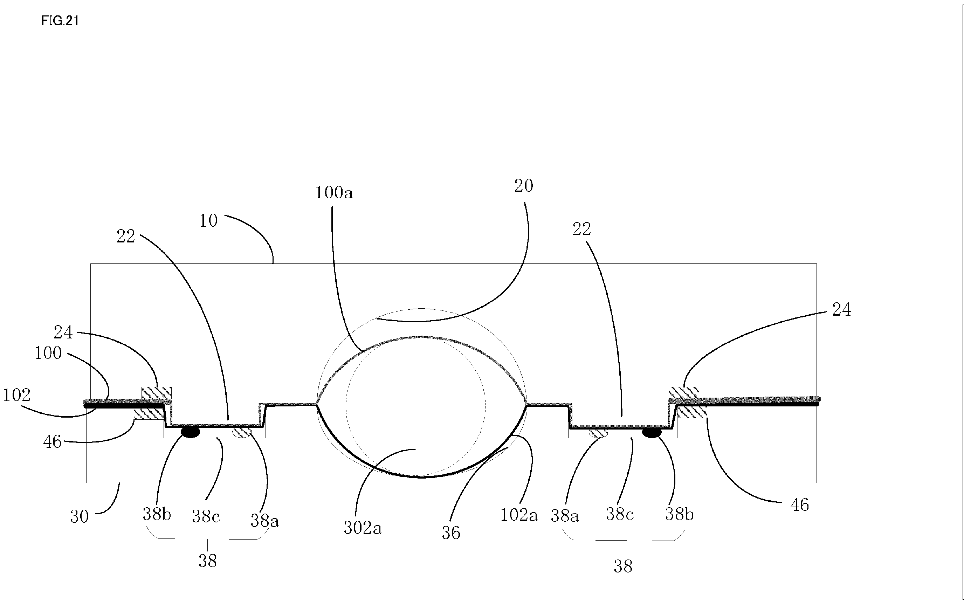

When the top member 10 further descends, the projections 22 enter the grooves 38c, sandwiching the elastic film 100 and the elastic film 102 between the tips of the projections 22 and the heating wire for welding 38a and the heating wire for cutting 38b, and pressing the films (pressurized state), as illustrated in Figure 21. In this case, the contact sensor 42a of the bottom member 30 is configured to make contact with the contact sensitive member 42b of the top member 10. In other words, it is possible for the contact sensor 42a to determine whether or not it is in the pressurized state.

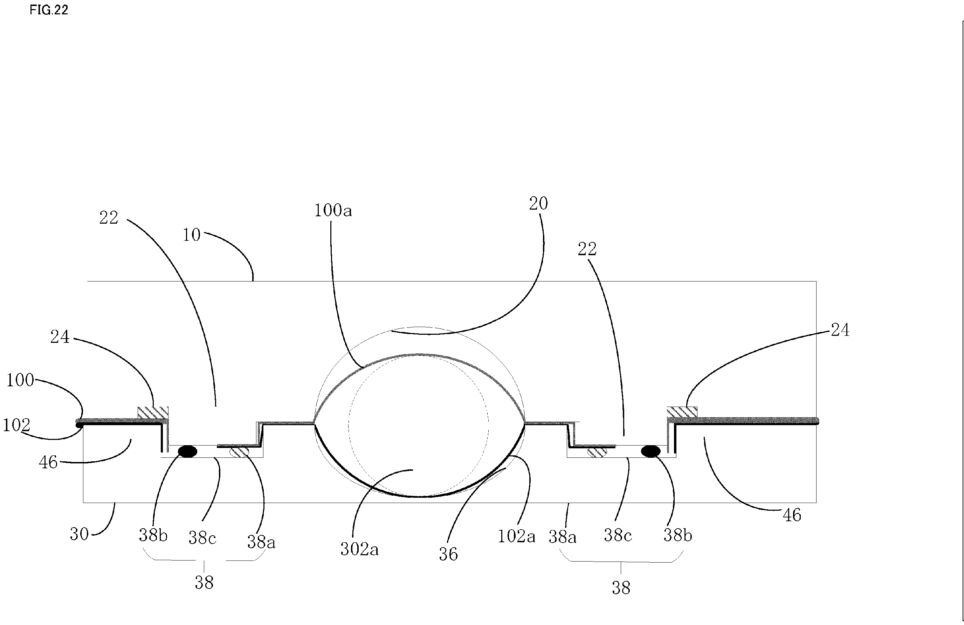

When the predetermined time t1 has elapsed in the state of Figure 21, the elastic film 100 and the elastic film 102 are cut by the heating wire for cutting 38b, as illustrated in Figure 22. In this case, the elastic film 100a and the elastic film 102a for forming the gloves are heated by the heating wire for welding 38a and welded to each other.

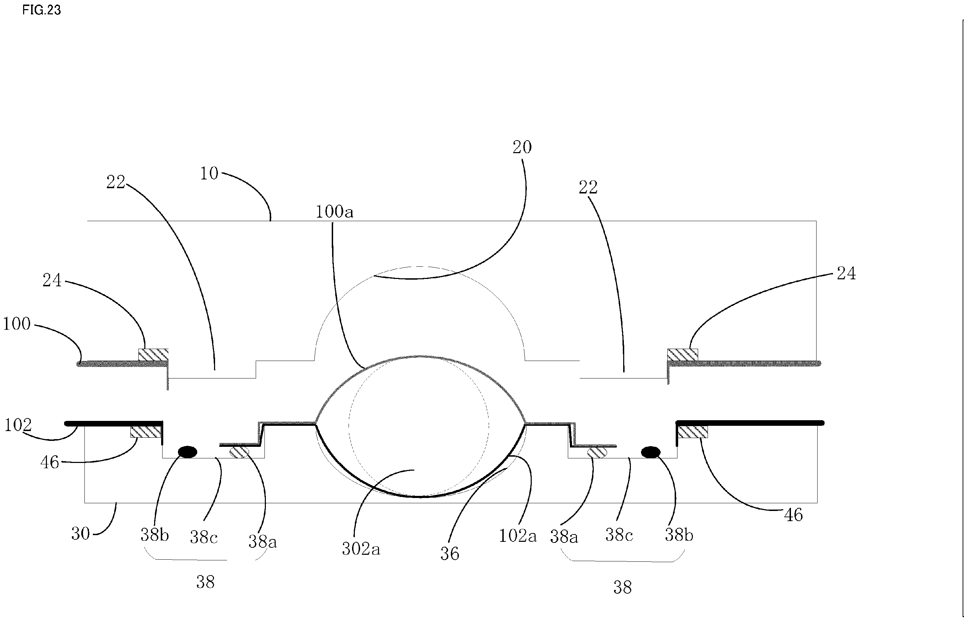

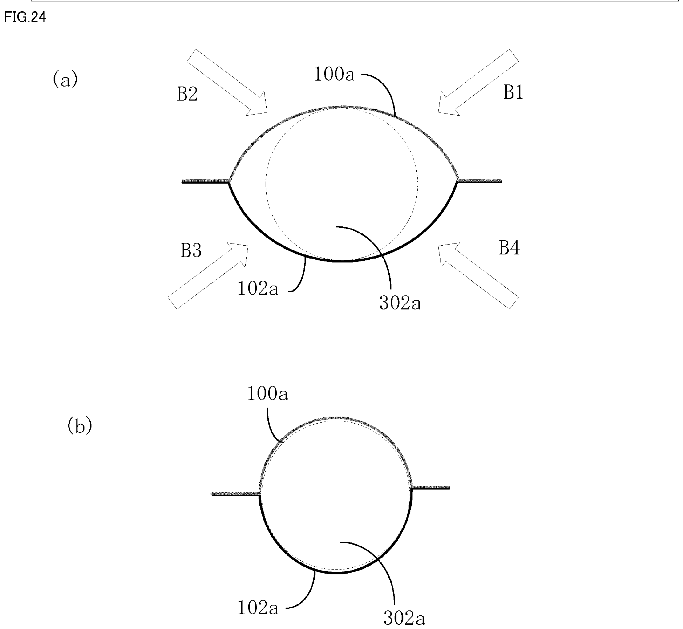

Once a predetermined time has elapsed from the state of Figure 21, processing proceeds to the state in Figure 22, and once in the state of Figure 22, the top member 10 moves upward as illustrated in Figure 23. In this case, the power supply to the heating wire for welding 38a and the heating wire for cutting 38b is stopped. When the top member 10 moves upward, the elastic films 100a and 102a are released from the pressurized state and become freely transformable. In the pressurized state, the elastic resilience acts on the elastic film 100a and the elastic film 102a as indicated by arrows B1 to B4 in Figure 24(A). When the top member 10 moves upward, the pressurized state is released, the elastic film 100a and the elastic film 102a become freely transformable, and the films are thus transformed so as to adhere to the little finger 302a as illustrated in Figure 24(B).

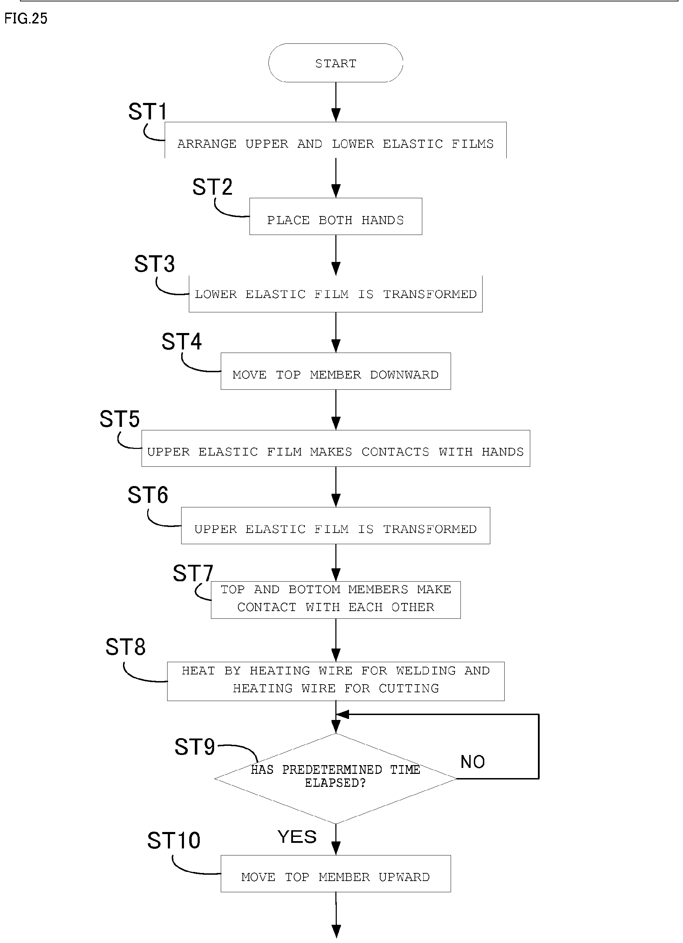

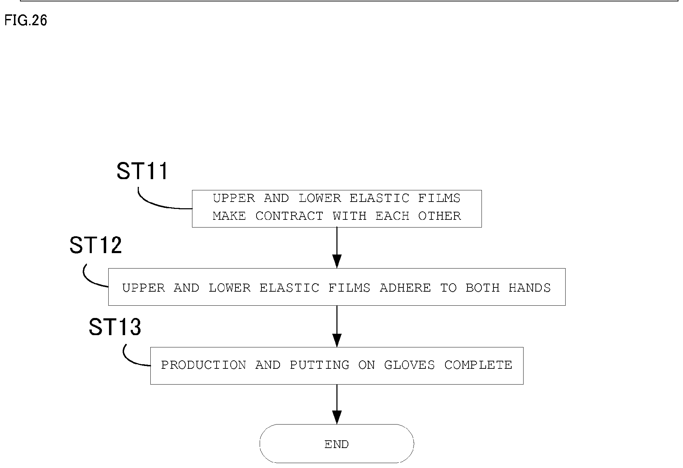

The method for producing and putting on gloves by the apparatus 1 is now summarized with reference to the flowcharts of Figure 25 and Figure 26. The user arranges the elastic film 100 on the top member 10, arranges the elastic film 102 on the bottom member 30 (step ST1 in Figure 25), and presses the power switch 70 to activate the apparatus 1. After confirmation of preparation completion for heating by the heating wire for welding 38a and the heating wire for cutting 38b through the display on the display device 16, the user places both hands in the two depressions 36 of the bottom member 30 from the upper side of the elastic film 102 (step ST2). The lower elastic film 102 is then transformed (step ST3) .

When the operation switch 40 is then pressed by the user, the apparatus 1 controls the top member 10 to move downward (step ST4). Step ST4 is an example of the moving step. When the top member 10 moves downward, the elastic film 100 arranged on the top member 10 makes contact with the back side of the hand (step ST5) and is transformed (step ST6). The top member 10 and the bottom member 30 then make contact with each other (step ST7), the elastic films 100 and 102 are pressurized and heated by the projections 22, the heating wire for welding 38a, and the heating wire for cutting 38b (step ST8). Step ST8 is an example of the welding and cutting step.

Once it is determined that the predetermined time t1 sufficient for welding and cutting has elapsed (step ST9), the apparatus 1 controls the top member to move upward (step ST10). Once the predetermined time t1 has elapsed, the elastic films 100 and 102 are cut into the shape of the hand contour and welded.

When the user releases both hands from the bottom member 30, the elastic films 100 and 102 contract (step ST11), adhere to the hands (step ST12), and produce gloves and put them on the hands (step ST13).

### [Second Embodiment]

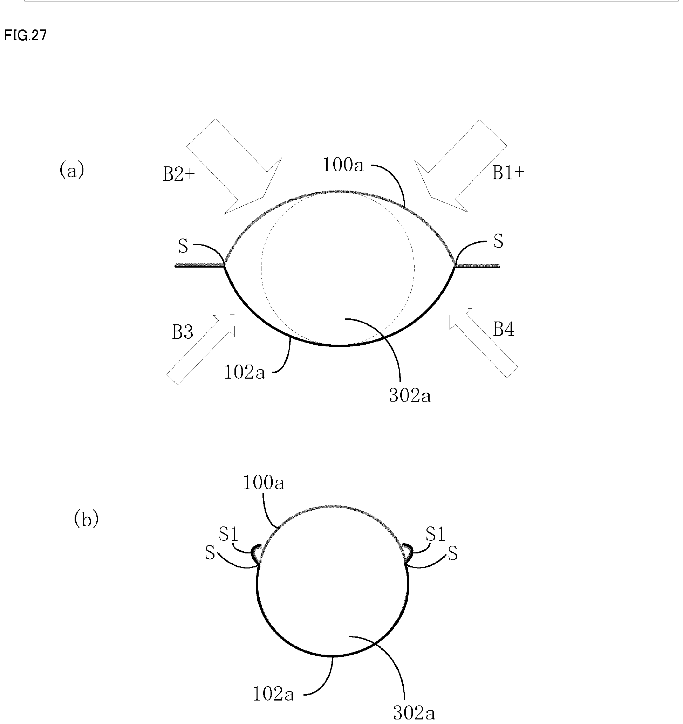

A second embodiment is described with reference to Figure 27. Note that description of matters in common with the first embodiment is omitted. The configuration of the apparatus 1 of the second embodiment is similar to that of the first embodiment, except that the elastic resilience of the elastic film 100 is greater than that of the elastic film 102. Accordingly, immediately after completion of the welding and cutting step of the elastic films 100 and 102, as illustrated in Figure 27(A), the relatively large elastic resilience B1+ and B2+ act on the elastic film 100a, and the relatively small elastic resilience B3 and B4 act on the elastic film 102a.

When the elastic films 100a and 102a are released from the pressurized state and become freely transformable, as illustrated in Figure 27(B), the elastic films 100a and 102a are transformed so as to adhere to the little finger 302a; however, since the elastic resilience of the elastic film 100a is greater than that of the elastic film 102a, connecting parts S of the elastic films 100a and 102a move to the upper side of the little finger 302a, that is, the finger back side (fingernail side). While almost all of the operations carried out by hands is performed by the finger pad side (fingerprint side) making contact with an object, it is possible to prevent the connecting part S from becoming an obstacle in the operation performed by the finger pad side since the connecting parts S move to the finger back side.

Due to the difference in the elastic resilience of the elastic film 100a and the elastic film 102a, welding parts S1 of the elastic film 100a and the elastic film 102a curve to the elastic film 100a side, that is, the back side of the little finger 302a, as illustrated in Figure 27(B). This further effectively prevents the welding parts S1 from becoming obstacles in the operation performed on the pad side of the user's little finger 302a.

### [Third Embodiment]

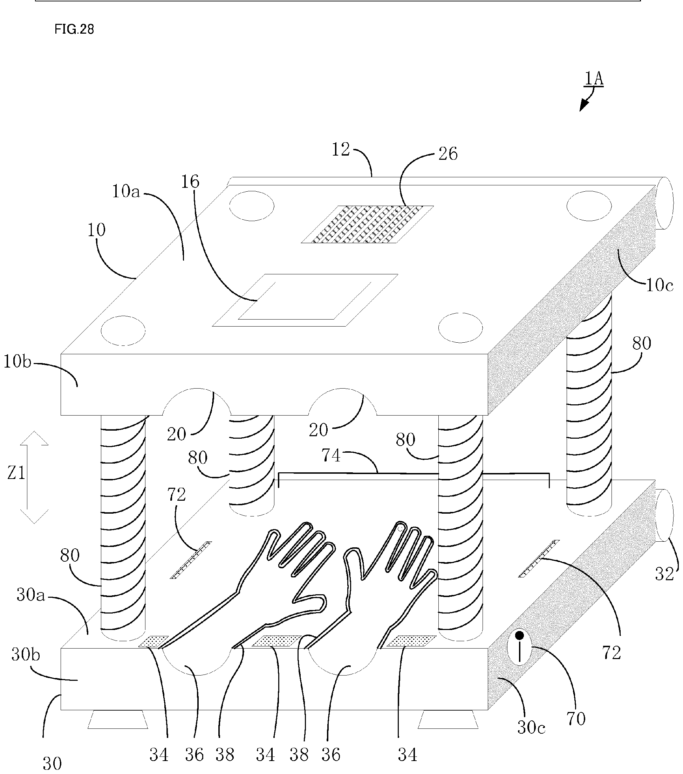

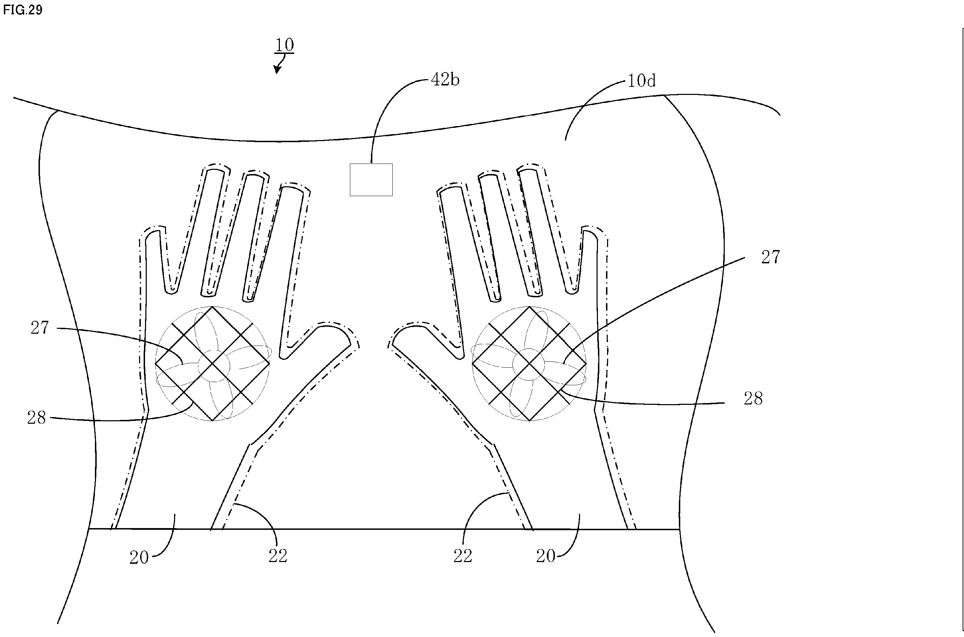

The third embodiment will be described with reference to Figures 28 to 33. Note that description of matters in common with the first embodiment is omitted. As illustrated in Figure 28, an air intake port 26 is arranged on the top member 10 of an apparatus 1A for taking the outside air into the top member 10. When the bottom face 10d of the top member 10 is viewed from the direction of the bottom member 30, as illustrated in Figure 29, air blowing devices 27 and mesh heating members 28 are deployed respectively in the depressions 20.

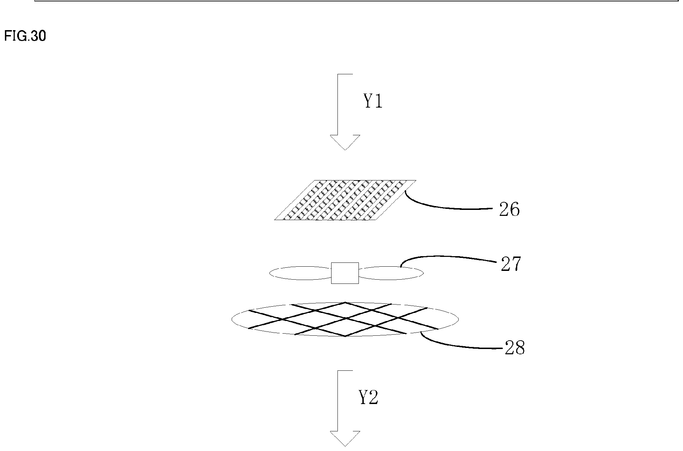

The heating member 28 is configured from a nichrome wire, for example. The air blowing device 27 is configured such that a fan having a plurality of blades is connected to a rotational axis of a motor. Figure 30 is a schematic view illustrating a positional relationship of the air intake port 26, the air blowing device 27, and the heating member 28. As illustrated in Figure 30, when the blades of the air blowing device 27 rotate, air is taken from the outside via the air intake port 26 as indicated by an arrow Y1, passes through the heating member 28 during heating, heated to become hot air, and is transmitted downward, as indicated by an arrow Y2. In the apparatus 1A, a film having heat shrinkable properties (hereinafter, referred to as a "heat shrinkable film") is used for the elastic film 100. The material of the heat shrinkable film is, for example, polyvinyl chloride, polystyrene, polyethylene terephthalate, polyethylene, polypropylene, or polyolefin. The elastic film 100 is formed of a single layer that is made from such materials or a multi-layer combined with other elastic films. The other elastic films are, for example, low density polyethylene films, cast polypropylene films, oriented polypropylene films, ethylene-vinyl acetate copolymer films, and the like. Adjustments such as selection of the materials of the elastic film 100 and the elastic film 102, and adoption of the configuration of the elastic films such as a multi-layer structure and the like are carried out to ensure welding properties of the elastic films.

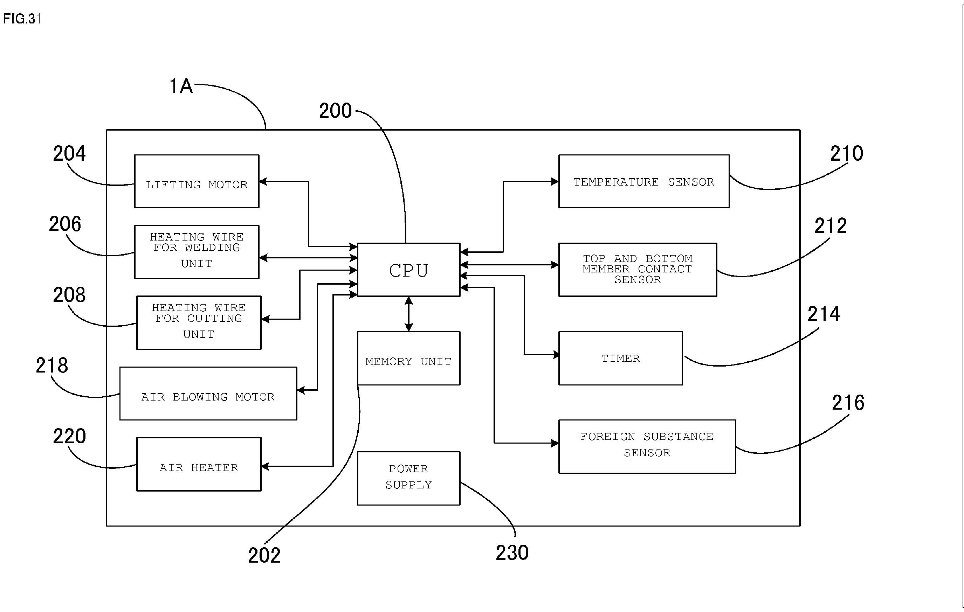

As illustrated in Figure 31, the apparatus 1A includes an air blowing motor 218 and an air heater 220. The air blowing motor 218 controls rotation of the motor of the air blowing device 27. The air heater 220 controls power supply to the heating member 28.

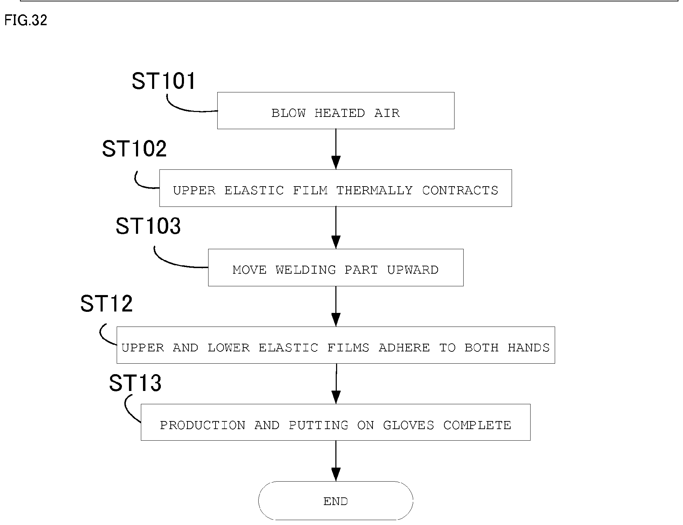

A method for producing and putting on gloves by the apparatus 1A will now be described with reference to Figure 32. The processes up to the welding and cutting step of the elastic film 100 and the elastic film 102 are similar to those of the first embodiment, and thus the descriptions thereof are omitted. When welding and cutting of the elastic film 100 and the elastic film 102 are completed, the apparatus 1A controls the top member 10 to move upward so as to blow heated air against the elastic film 100 (step ST101 in Figure 32). The elastic film 100 thermally contracts (step ST102) as it is a heat shrinkable film. Then, the connecting parts S of the elastic film 100 and the elastic film 102 move upward (step ST103) while the elastic film 100 and the elastic film 102 adhere to the hands (step ST12), thereby completing the gloves (step ST13).

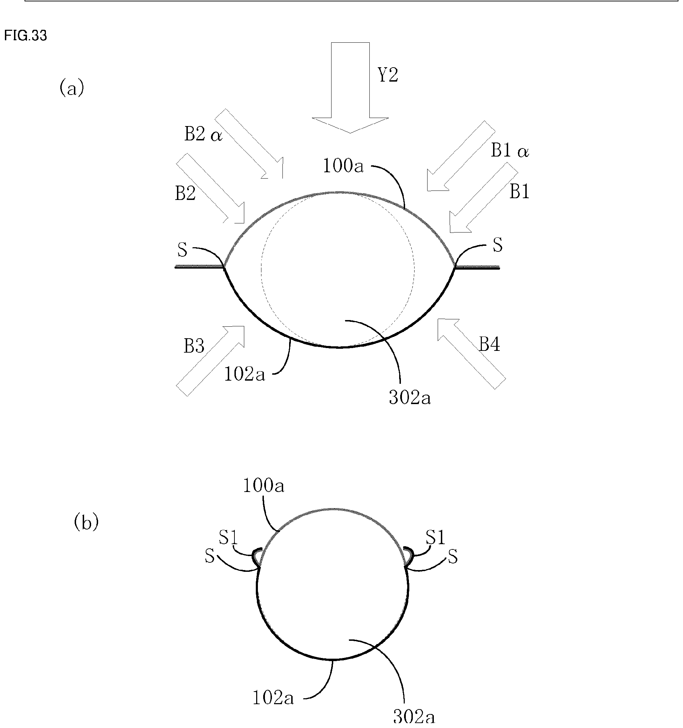

Immediately after completion of the welding and cutting step of the elastic films 100 and 102, the elastic resilience B1 and B2 act on the elastic film 100a, and the elastic resilience B3 and B4 act on the elastic film 102a, as illustrated in Figure 33(A).

Once the top member 10 moves upward and the heated air is blown against the elastic film 100a, the contractive forces B1α and B2α act on the elastic film 100a as well. Then, as illustrated in Figure 33(B), the elastic films 100a and 102b are transformed so as to adhere to the little finger 302a; however, the connecting part of the elastic films 100a and 102a moves to the upper side of the little finger 302a, that is, the finger back side, because the elastic resilience B1 and B2 as well as contractive forces B1α and B2α act on the elastic film 100a. While almost all of the operations carried out by hands are performed by the finger pad side making contact with an object, it is possible to prevent the connecting parts S from becoming obstacles in the operation performed by the finger pad side since the connecting parts S move to the finger back side.

Furthermore, since the elastic film 100a has heat shrinkability, the welding parts S1 of the elastic film 100a and the elastic film 102a curve toward the elastic film 100a side, that is, the back side of the little finger 302a, as illustrated in Figure 33(B). This further effectively prevents the welding part S1 from becoming an obstacle in the operation performed on the pad side of the user's little finger 302a.

### [Fourth Embodiment]

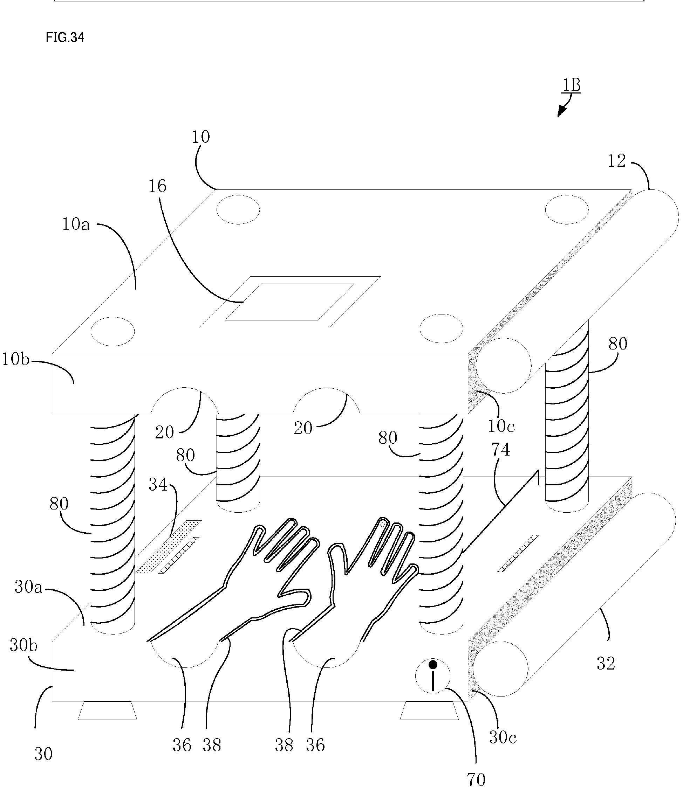

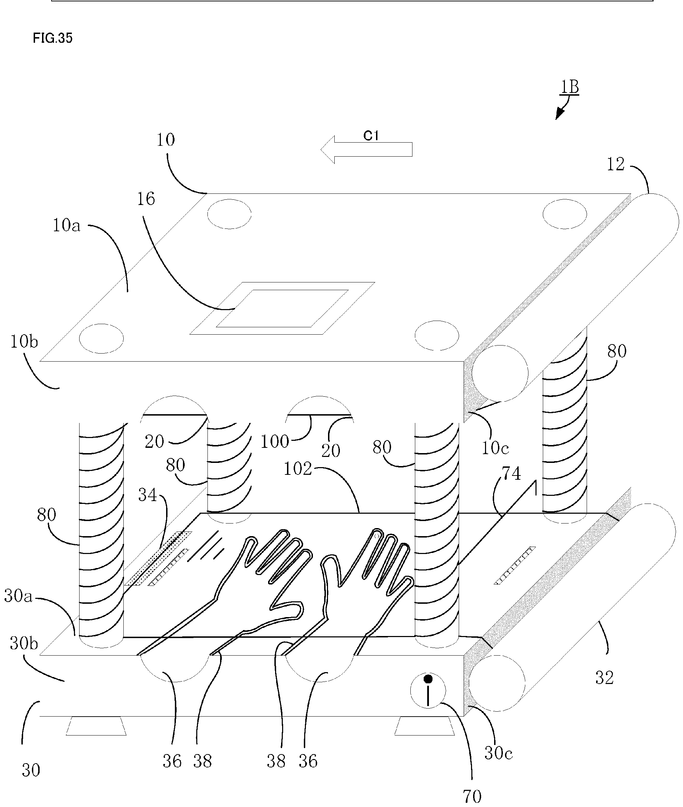

The fourth embodiment will be described with reference to Figures 34 and 35. Note that description of matters in common with the first embodiment is omitted. In the fourth embodiment, as illustrated in Figures 34 and 35, the film holder 12 and the film holder 32 are arranged on the side face 10c of the top member 10 and the side face 30c of the bottom member 30, respectively. The elastic film 100 and the elastic film 102 are pulled out in a right to left direction (direction of arrow C1), and arranged on the lower face 10d of the top member 10 and the upper face 30a of the bottom member 30, respectively.

### [Fifth Embodiment]

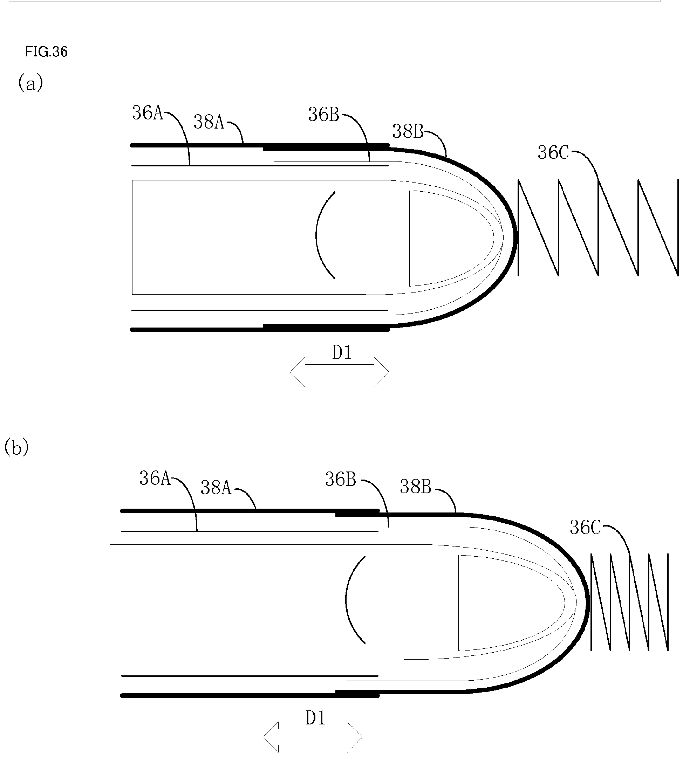

The fifth embodiment will be described with reference to Figure 36. Note that description of matters common with the first embodiment is omitted.

In the fifth embodiment, the depression 36 is configured by a base portion 36A and a fingertip portion 36B, and a welding and cutting unit 38 is configured by a base welding and cutting part 38A and a fingertip welding and cutting portion 38B. The base portion 36A and the base welding and cutting part 38A are integrally configured, and the fingertip portion 36B and the fingertip welding and cutting part 38B are integrally configured. As illustrated in Figures 36a and 36b, the fingertip portion 36B of the depression 36 can be moved toward the base portion 36A in the direction of arrow D1. Specifically, depending on the individual finger length, the length of the finger portion configured by the base portion 36A and the fingertip portion 36B is adjustable. A spring 36C is arranged on the outer side portion of the tip of the fingertip portion 36B and the length of the base portion 36A and the fingertip portion 36B is biased so as to be minimized.

Note that the shape of the depression 20 of the top member can be adjusted so as to match the shape of the depression 36 of the bottom member.

### [Sixth Embodiment]

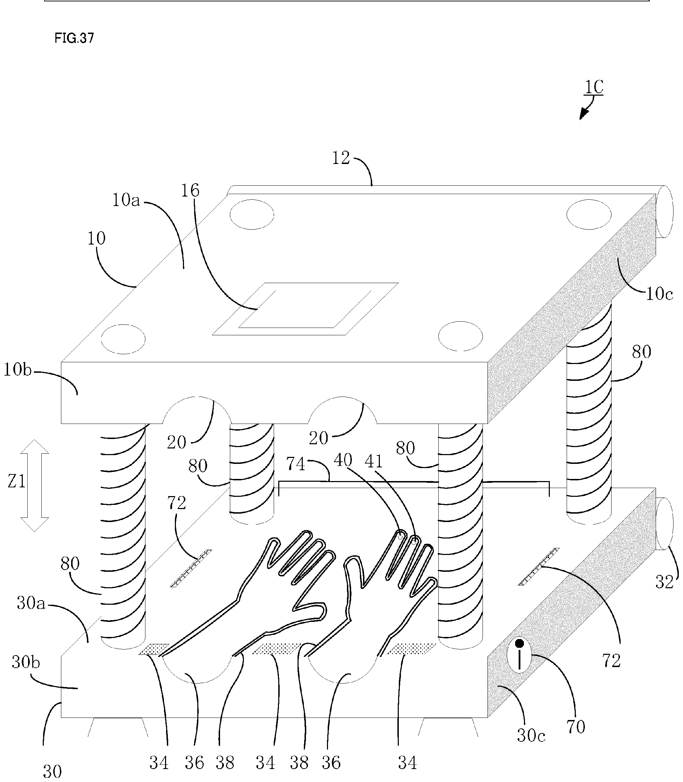

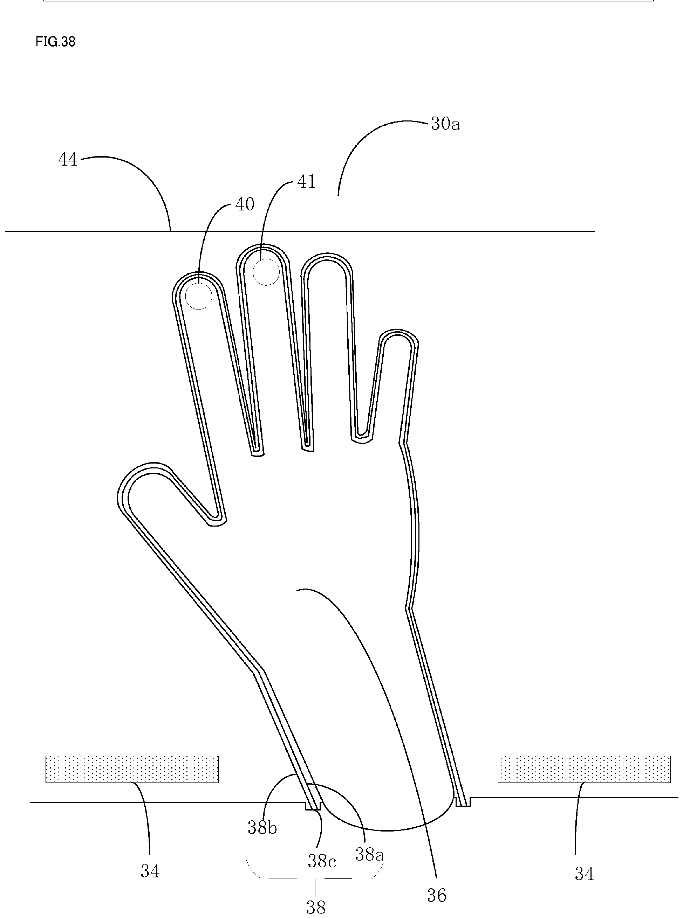

The sixth embodiment will be described with reference to Figures 37 and 38. Note that description of matters common with the third embodiment is omitted. In an apparatus 1C of the sixth embodiment, the operation switch 40 and an operation switch 41 are deployed on the depression 36. In the depression 36 to house the user's right hand, the operation switch 40 is deployed on the index finger corresponding portion to make the top member 10 move upward and downward. The operation switch 41 is arranged on the middle finger corresponding portion in the depression 36 for controlling the air blowing device 27 and the heating member 28.

When the predetermined time t1 has elapsed after the pressurized state is entered, the apparatus 1C displays on the display device 16 "Welding and cutting has completed. Please perform air blowing operation.", for example, a text instructing to perform the operation of blowing the heated air against the elastic film 100a. The user visually confirms the text, and presses the operation switch 41 so as to activate the air blowing device 27 and the heating member 28.

### [Seventh Embodiment]

The seventh embodiment will be described. Note that description of matters common with the first embodiment is omitted. In the seventh embodiment, after an activation switch 70 is pressed, when it is determined by the signal received by the temperature sensor 210 that the heat generated by the heating wire for welding 38a reaches a welding preparation temperature Pm1, and that the heat generated by the heating wire for cutting 38b reaches a cutting preparation temperature Pc1, the apparatus 1 displays on the display device 16 "Usable temperature is reached", for example, a text indicating preparation completion. The welding preparation temperature Pm1 is a temperature lower than a welding temperature Pm2, which is a temperature capable of welding the elastic film 100 and the elastic film 102, for example, a temperature of 50% of the welding temperature Pm2. The cutting preparation temperature Pc1 is a temperature lower than a cutting temperature Pc2, which is a temperature capable of cutting the elastic film 100 and the elastic film 102, for example, a temperature of 50% of the cutting temperature Pc2.

When the user presses the operation switch 40, the top member 10 moves downward, and the top and bottom member contact sensor 212 receives a signal that indicates contact between the contact sensor 42a (see Figure 5) and the contact sensitive member 42b (see Figure 8) arranged on the top member 10, the apparatus 1 increases the heating temperature of the heating wire for welding 38a to the welding temperature Pm2, and increases the heating temperature of the heating wire for cutting 38b to the cutting temperature Pc2. The timer 214 measures the elapsed time after the temperatures reach the welding temperature Pm2 and the cutting temperature Pc2. When the predetermined time t1 has elapsed, the apparatus 1 controls the top member 10 to move upward.

The apparatus for producing and putting on gloves of the present invention is not limited to the embodiments described above, and various modifications may be applied without departing from the scope of the invention. For example, in the third embodiment, both the elastic film 100 and the elastic film 102 may be formed by a heat shrinkable film. Moreover, it is possible to move the connecting parts S to the finger back side using a greater elastic resilience of the elastic film 100 than that of the elastic film 102, or using a greater thermal shrinkage of the elastic film 100 than that of the elastic film 102.

### [References Signs List]

- 1, 1A, 1B, 1C: Apparatus for producing and putting on gloves
- 10: Top member
- 12: Film holder
- 14: Film fixing part
- 20: Depression
- 24: Slip-preventing member
- 30: Bottom member
- 32: Film holder
- 34: Film fixing part
- 36: Depression
- 38a: Heating wire for welding
- 38b: Heating wire for cutting
- 38c: Groove
- 46: Slip-preventing member
- 80: Rotating column
- 100, 102: Elastic film
- 300: Left hand
- 302: Right hand
- 400: Glove

## Claims

1. An apparatus (1) for producing and putting on gloves, comprising:
a first member (10) on which a first elastic film Z (100) is arranged;
a second member (30) on which a second elastic film (102) is arranged;
welding means (38a) for welding the first elastic film and the second elastic film at a first outer side position that is a position on the outer side of a contour of a user's hand in a state where the hand is sandwiched between the first elastic film and the second elastic film; and
cutting means (38a) for cutting the first elastic film and the second elastic film at a second outer side position that is a positi on further on the outer side than the first outer side position;
the apparatus being **characterized in that**, the cutting means is a heating wire for cutting (38b) which generates heat at a temperature sufficient for cutting the first elastic film (100) and the second elastic film (102), generating heat in a temperature range from 80 degrees Celsius (°C) to 150 degrees Celsius (°C), and the welding means is a heating wire (38a) for welding which generates heat at a temperature sufficient for welding the first elastic film (100) and the second elastic film (102), and the heating temperature is lower than the heating temperature of the heating wire for cutting (38b), generating heat in a temperature range from 60 degrees Celsius (°C) to 110 degrees Celsius (°C).

2. The apparatus for producing and putting on gloves according to Claim 1, wherein:
a first depression (20) that can house a portion on a hand back side is formed in the first member;
a second depression (36) that can house a portion on a palm side is formed in the second member; and
a face on the hand back side makes contact with the first elastic film, a face on the palm side makes contact with the second elastic film, and the hand is housed in a space formed by the first depression and the second depression in a state where the hand is sandwiched between the first member and the second member.

3. The apparatus for producing and putting on gloves according to Claim 1 or 2, wherein:
first slip-preventing means (24) of the first member, for preventing slippage of the first elastic film is arranged on a portion on an outer side of a portion on which the first depression is formed; and
second slip-preventing means (46) of the second member, for preventing slippage of the second elastic film is arranged on a portion on an outer side of a portion on which the second depression is formed.

4. The apparatus for producing and putting on gloves according to Claim 2 or 3, wherein:
an operation switch (40) for adjusting relative positions of the first member and the second member is arranged on the second depression.

5. The apparatus for producing and putting on gloves according to any one of Claims 1 to 4, wherein:
elastic resilience of the first elastic film is set to be greater than elastic resilience of the second elastic film.

6. The apparatus for producing and putting on gloves according to any one of Claims 1 to 4, wherein:
the first elastic film has heat shrinkability; and
the apparatus further comprises air blowing means (27) for blowing heated air against the first elastic film.

7. The apparatus for producing and putting on gloves according to Claim 2, wherein:
when the hand is housed in a space formed by the first depression and the second depression, heat generated by the welding means is increased to a welding temperature for welding the first elastic film and the second elastic film, and heat generated by the cutting means is increased to a cutting temperature for cutting the first elastic film and the second elastic film.

8. A method for producing and putting on gloves with an apparatus according to claim 1, comprising:
a moving step for moving a first member on which a first elastic member is arranged and a second member on which a second elastic film is arranged so as to sandwich a hand; and
a welding and cutting step for welding the first elastic film and the second elastic film by heat generated by a first heating wire for welding in a first temperature range from 60 degrees Celsius to 110 degrees Celsius at a first outer side position that is a position on an outer side of a contour of the hand in a state where the hand is sandwiched between the first elastic film and the second elastic film, and cutting the first elastic film and the second elastic film by heat generated by a second heating wire for cutting in a second temperature range from 80 degrees Celsius to 150 degrees Celsius at a second outer side position that is a position further on the outer side than the first outer side position.

## Patentansprüche

1. Einrichtung (1) zum Herstellen und Anziehen von Handschuhen, umfassend:
ein erstes Element (10), auf dem eine erste elastische Folie (100) angeordnet ist;
ein zweites Element (30), auf dem eine zweite elastische Folie (102) angeordnet ist;
Schweißmittel (38a) zum Schweißen der ersten elastischen Folie und der zweiten elastischen Folie an einer ersten Außenseitenposition, die eine Position auf der Außenseite einer Kontur einer Hand eines Benutzers in einem Zustand ist, in dem die Hand zwischen der ersten elastischen Folie und der zweiten elastischen Folie eingeschlossen ist; und
Schneidmittel (38a) zum Schneiden der ersten elastischen Folie und der zweiten elastischen Folie an einer zweiten Außenseitenposition, die eine Position weiter auf der Außenseite als die erste Außenseitenposition ist;
wobei die Einrichtung **dadurch gekennzeichnet ist, dass** das Schneidmittel ein Heizdraht zum Schneiden (38b) ist, der Wärme bei einer Temperatur erzeugt, die zum Schneiden der ersten elastischen Folie (100) und der zweiten elastischen Folie (102) ausreicht, wobei Wärme in einem Temperaturbereich von 80 Grad Celsius (°C) bis 150 Grad Celsius (°C) erzeugt wird, und wobei das Schweißmittel ein Heizdraht (38a) zum Schweißen ist, der Wärme bei einer Temperatur erzeugt, die zum Schweißen der ersten elastischen Folie (100) und der zweiten elastischen Folie (102) ausreicht, und wobei die Heiztemperatur niedriger als die Heiztemperatur des Heizdrahts zum Schneiden (38b) ist, wobei Wärme in einem Temperaturbereich von 60 Grad Celsius (°C) bis 110 Grad Celsius (°C) erzeugt wird.

2. Einrichtung zum Herstellen und Anziehen von Handschuhen nach Anspruch 1, wobei:
eine erste Vertiefung (20), die einen Abschnitt auf einer Handrückseite aufnehmen kann, in dem ersten Element gebildet ist;
eine zweite Vertiefung (36), die einen Abschnitt auf einer Handflächenseite aufnehmen kann, in dem zweiten Element gebildet ist; und
eine Fläche auf der Handrückseite Kontakt mit der ersten elastischen Folie herstellt, eine Fläche auf der Handflächenseite Kontakt mit der zweiten elastischen Folie herstellt und die Hand in einem Raum aufgenommen ist, der durch die erste Vertiefung und die zweite Vertiefung in einen Zustand gebildet wird, in dem die Hand zwischen dem ersten Element und dem zweiten Element eingeschlossen ist.

3. Einrichtung zum Herstellen und Anziehen von Handschuhen nach Anspruch 1 oder 2, wobei:
ein erstes Schlupfverhinderungsmittel (24) des ersten Elements zum Verhindern von Schlupf der ersten elastischen Folie auf einem Abschnitt auf einer Außenseite eines Abschnitts gebildet ist, auf dem die erste Vertiefung gebildet ist; und
ein zweites Schlupfverhinderungsmittel (46) des zweiten Elements zum Verhindern von Schlupf der zweiten elastischen Folie auf einem Abschnitt auf einer Außenseite eines Abschnitts gebildet ist, auf dem die zweite Vertiefung gebildet ist.

4. Einrichtung zum Herstellen und Anziehen von Handschuhen nach Anspruch 2 oder 3, wobei:
ein Bedienschalter (40) zum Einstellen von relativen Positionen des ersten Elements und des zweiten Elements auf der zweiten Vertiefung angeordnet ist.

5. Einrichtung zum Herstellen und Anziehen von Handschuhen nach einem der Ansprüche 1 bis 4, wobei:
eine elastische Nachgiebigkeit der ersten elastischen Folie so festgelegt ist, dass sie größer als eine elastische Nachgiebigkeit der zweiten elastischen Folie ist.

6. Einrichtung zum Herstellen und Anziehen von Handschuhen nach einem der Ansprüche 1 bis 4, wobei:
die erste elastische Folie eine Wärmeschrumpffähigkeit aufweist; und
die Einrichtung ferner Luftblasmittel (27) zum Blasen von erwärmter Luft gegen die erste elastische Folie umfasst.

7. Einrichtung zum Herstellen und Anziehen von Handschuhen nach Anspruch 2, wobei:
wenn die Hand in einem durch die erste Vertiefung und die zweite Vertiefung gebildeten Raum aufgenommen ist, durch das Schweißmittel erzeugte Wärme auf eine Schweißtemperatur zum Schweißen der ersten elastischen Folie und der zweiten elastischen Folie erhöht wird, und durch das Schneidmittel erzeugte Wärme auf eine Schneidtemperatur zum Schneiden der ersten elastischen Folie and der zweiten elastischen Folie erhöht wird.

8. Verfahren zum Herstellen und Anziehen von Handschuhen mit einer Einrichtung nach Anspruch 1, umfassend:
einen Bewegungsschritt zum Bewegen eines ersten Elements, auf dem ein erstes elastisches Element angeordnet ist, und eines zweiten Elements, auf dem eine zweite elastische Folie angeordnet ist, derart, dass eine Hand eingeschlossen wird; und
einen Schweiß- und Schneidschritt zum Schweißen der ersten elastischen Folie und der zweiten elastischen Folie mittels durch einen ersten Heizdraht zum Schweißen erzeugter Wärme in einem ersten Temperaturbereich von 60 Grad Celsius bis 110 Grad Celsius an einer ersten Außenseitenposition, die eine Position auf einer Außenseite einer Kontur der Hand in einem Zustand ist, in dem die Hand zwischen der ersten elastischen Folie und der zweiten elastischen Folie eingeschlossen ist, und Schneiden der ersten elastischen Folie und der zweiten elastischen Folie mittels durch einen zweiten Heizdraht zum Schneiden erzeugter Wärme in einem zweiten Temperaturbereich von 80 Grad Celsius bis 150 Grad Celsius an einer zweiten Außenseitenposition, die eine Position weiter auf der Außenseite als die erste Außenseitenposition ist.

## Revendications

1. Appareil (1) pour produire et enfiler des gants, comprenant :
un premier élément (10) sur lequel un premier film élastique (100) est agencé ;
un second élément (30) sur lequel un second film élastique (102) est agencé ;
un moyen de soudage (38a) pour souder le premier film élastique et le second film élastique à une première position de côté extérieur qui est une position sur le côté extérieur d'un contour d'une main d'un utilisateur dans un état où la main est entourée de part et d'autre entre le premier film élastique et le second film élastique ; et
un moyen de découpage (38a) pour découper le premier film élastique et le second film élastique à une seconde position de côté extérieur qui est une position plus loin sur le côté extérieur que la première position de côté extérieur ;
l'appareil étant **caractérisé en ce que** le moyen de découpage est un fil chauffant pour découper (38b) qui génère de la chaleur à une température suffisante pour découper le premier film élastique (100) et le second film élastique (102), générant de la chaleur dans une plage de température allant de 80 degrés Celsius (°C) à 150 degrés Celsius (°C), et le moyen de soudage est un fil chauffant (38a) pour souder qui génère de la chaleur à une température suffisante pour souder le premier film élastique (100) et le second film élastique (102), et la température de chauffage est plus basse que la température de chauffage du fil chauffant pour découper (38b), générant de la chaleur dans une plage de température allant de 60 degrés Celsius (°C) à 110 degrés Celsius (°c).

2. Appareil pour produire et enfiler des gants selon une revendication 1, dans lequel :
un premier creux (20) qui peut loger une partie sur un côté dos de main est formé dans le premier élément ;
un second creux (36) qui peut loger une partie sur un côté paume est formé dans le second élément ; et
une face sur le côté dos de main entre en contact avec le premier film élastique, une face sur le côté paume entre en contact avec le second film élastique, et la main est logée dans un espace formé par le premier creux et le second creux dans un état où la main est entourée de part et d'autre entre le premier élément et le second élément.

3. Appareil pour produire et enfiler des gants selon la revendication 1 ou 2, dans lequel :
un premier moyen de prévention de glissement (24) du premier élément, pour empêcher le glissement du premier film élastique, est agencé sur une partie sur un côté extérieur d'une partie sur laquelle le premier creux est formé ; et
un second moyen de prévention de glissement (46) du second élément, pour empêcher le glissement du second film élastique, est agencé sur une partie sur un côté extérieur d'une partie sur laquelle le second creux est formé.

4. Appareil pour produire et enfiler des gants selon la revendication 2 ou 3, dans lequel :
un interrupteur de fonctionnement (40) pour ajuster des positions relatives du premier élément et du second élément est agencé sur le second creux.

5. Appareil pour produire et enfiler des gants selon l'une quelconque des revendications 1 à 4, dans lequel :
une résilience élastique du premier film élastique est établie pour être supérieure à une résilience élastique du second film élastique.

6. Appareil pour produire et enfiler des gants selon l'une quelconque des revendications 1 à 4, dans lequel :
le premier film élastique a une thermo-rétractabilité ; et
l'appareil comprend en outre un moyen de soufflage d'air (27) pour souffler de l'air chauffé contre le premier film élastique.

7. Appareil pour produire et enfiler des gants selon la revendication 2, dans lequel :
lorsque la main est logée dans un espace formé par le premier creux et le second creux, de la chaleur générée par le moyen de soudage est augmentée jusqu'à une température de soudage pour souder le premier film élastique et le second film élastique, et de la chaleur générée par le moyen de découpage est augmentée jusqu'à une température de découpage pour découper le premier film élastique et le second film élastique.

8. Procédé pour produire et enfiler des gants avec an appareil selon la revendication 1, comprenant :
une étape de déplacement pour déplacer un premier élément, sur lequel un premier élément élastique est agencé, et un second élément, sur lequel un second film élastique est agencé, afin de se trouver de part et d'autre d'une main ; et
une étape de soudage et de découpe pour souder le premier film élastique et le second film élastique par de la chaleur générée par un premier fil chauffant pour souder dans une première plage de température allant de 60 degrés Celsius à 110 degrés Celsius à une première position de côté extérieur qui est une position sur un côté extérieur d'un contour de la main dans un état où la main est entourée de part et d'autre entre le premier film élastique et le second film élastique, et la découpe du premier film élastique et du second film élastique par de la chaleur générée par un second fil chauffant pour découper dans une seconde plage de température allant de 80 degrés Celsius à 150 degrés Celsius à une seconde position de côté extérieur qui est une position plus loin sur le côté extérieur que la première position de côté extérieur.
